# EUROPÄISCHE PATENTSCHRIFT

(11) **EP 3 488 287 B1**
(45) Veröffentlichungstag und Bekanntmachung des Hinweises auf die Patenterteilung: **20.12.2023**
(21) Anmeldenummer: 17746022.7
(22) Anmeldetag: 20.07.2017
(51) Int. Cl.: G02C 7/00, B29D 11/00, C09D 11/30, B29C 67/00, C09D 11/101, B29C 64/112, B33Y 70/00, B33Y 80/00, G02C 7/10, G02C 7/12

(54) **DRUCKTINTE, VORZUGSWEISE 3D-DRUCKTINTE, BRILLENGLAS UND VERFAHREN ZUR HERSTELLUNG EINES BRILLENGLASES**
PRINTING INK, PREFERABLY 3D PRINTING INK, SPECTACLE LENS, AND METHOD FOR MANUFACTURING AN EYEGLASS LENS
ENCRE D'IMPRESSION, DE PREFERENCE ENCRE D'IMPRESSION 3D, VERRE DE LUNETTE ET PROCEDE DE PRODUCTION D'UN VERRE DE LUNETTE

(30) Priorität: 21.07.2016 EP 16180588
(43) Veröffentlichungstag der Anmeldung: 29.05.2019
(73) Patentinhaber: Carl Zeiss Vision International GmbH, 73430 Aalen (DE)
(72) Erfinder: GLÖGE, Thomas, 73614 Schorndorf (DE); UHL, Eberhard, 73432 Aalen (DE); WEINREICH, Manuela, 73431 Aalen (DE); HAIDL, Markus, 73431 Aalen (DE); HUGENBERG, Norbert, 73434 Aalen (DE)
(74) Vertreter: Carl Zeiss AG - Patentabteilung
(86) Internationale Anmeldenummer: PCT/EP2017/068299
(87) Internationale Veröffentlichungsnummer: WO 2018/015469

(56) Entgegenhaltungen:
- WO-A1-2004/078862
- WO-A1-2016/094706
- DE-A1-102009 004 377
- US-A- 5 959 761
- US-A1- 2003 165 686
- US-A1- 2011 262 711
- US-A1- 2012 329 899
- US-A1- 2015 153 589

## Beschreibung

Die vorliegende Erfindung betrifft ein Brillenglas sowie ein Verfahren zu dessen Herstellung.

DE 10 2009 004 377 A1 offenbart ein Verfahren zum Herstellen eines Brillenglases durch einheitenweises Anordnen zumindest eines Werkstoffs, vorzugsweise eines UV-härtenden Polymers, mittels eines Werkstoffverarbeitungsgeräts. Werden gemäß DE 10 2009 004 377 A1 zwei Werkstoffe verwendet, kann ein Werkstoff ein Polymer zur Bildung des Brillenglases und ein Werkstoff ein Stützmaterial sein, welches an Stellen angeordnet ist, die im fertigen Brillenglas materialfrei sein sollen. Der zweite Werkstoff kann auch ein polymerfremdes Material sein, welches es ermöglicht, Strukturen ähnlich einer Gravur in das Brillenglas einzubringen. Weiterhin kann der zweite Werkstoff identisch oder ähnlich dem ersten Werkstoff sein, jedoch eine andere Farbe, einen anderen Transmissionsgrad oder einen anderen Brechungsindex aufweisen. Mittels des in DE 10 2009 004 377 A1 beschriebenen Verfahrens können auch Teilerschicht(en), Polarisationsschicht(en) oder Schicht(en) zur Splittersicherheit in oder an einem Brillenglas angeordnet werden.

Die WO 2015/014381 A1 beschreibt die Verwendung additiver Herstellungsprozesse, wie z.B. Stereolithografie (SLA), Tintenstrahldrucken, selektives Lasersintern (SLS), selektives Laserschmelzen (SLM) oder Fused Deposition Modeling (FDM) zur Herstellung transparenter ophthalmischer Linsen. Das Dokument beschreibt die Herstellung derartiger Linsen durch Nebeneinanderstellen von ein dreidimensionales Gitter bildenden Volumenelementen (Voxeln) mit einer Ausdehnung zwischen 0,1 µm und 500 µm in einer Richtung in einer vorbestimmen Anordnung, welche z.B. in einer CAD (Computer Aided Design) Datei definiert sein kann. Jedes Volumenelement (Voxel) besteht aus einer Zusammensetzung mit wenigstens einem Polymer oder Vorpolymer oder Monomer. Zwischen den Volumenelementen (Voxeln) wird jeweils eine Konnektivität durch Ausbildung einer chemischen oder mechanischen Bindung hergestellt. Als geeignete Polymere gibt die Schrift Polyolefine, wie z.B. Cycloolefinpolymere, Polyacrylate, wie z.B. Polymethyl(meth)acrylat, Poly(meth)acrylat, Polyethyl(meth)acrylat, Polybutyl(meth)acrylat, Polyisobutyl(meth)acrylat, Polyester, Polyamide, Polysiloxane, Polyimide, Polyurethane, Polythiourethane, Polycarbonate, Polyallyle, Polysulfide, Polyvinyle, Polyarylene, Polyoxide und Polysulfone und Mischungen davon an.

Aufgabe der vorliegenden Erfindung war es, eine druckbare Zusammensetzung zur Verfügung zu stellen, welche den Druck eines optischen Elements, insbesondere eines Brillenglases, optional eines farbigen Brillenglases, ermöglicht.

Die Aufgabe wurde gelöst durch Bereitstellung eines Brillenglases, welches wenigstens eine farb- und/oder effektgebende Lage im Inneren desselben umfasst, wobei das Brillenglas erhältlich ist durch einheitenweise Anordnung wenigstens eines Volumenelements einer Drucktinte, vorzugsweise 3D-Drucktinte, ohne Farbmittel, und durch einheitenweise Anordnung wenigstens eines Volumenelements einer Drucktinte, vorzugsweise 3D-Drucktinte, umfassend wenigstens ein Farbmittel, die Drucktinte jeweils umfassend wenigstens eine strahlungshärtbare Komponente, wobei die farb- und/oder effektgebende Lage wenigstens ein Volumenelement einer Drucktinte umfassend wenigstens ein Farbmittel umfasst, die strahlungshärtbare Komponente der Drucktinte ohne Farbmittel gleich oder verschieden zu der strahlungshärtbaren Komponente der Drucktinte mit wenigstens einem Farbmittel ist oder die strahlungshärtbare Komponente der Drucktinte ohne Farbmittel kompatibel zu dem wenigstens einen Farbmittel und zu der strahlungshärtbaren Komponente der Drucktinte umfassend wenigstens ein Farbmittel ist, und wobei die farb- und/oder effektgebende Lage wenigstens ein Volumenelement der Drucktinte mit wenigstens einem Farbmittel umfasst, und das Brillenglas durch die Merkmale des Anspruchs 1 gekennzeichnet ist.

Bevorzugte Weiterbildungen des Brillenglases sind in den abhängigen Ansprüchen 2 bis 11 angegeben.

Gegenstand der Erfindung ist weiterhin ein Verfahren zur Herstellung eines Brillenglases gemäß Anspruch 12, wobei das Verfahren die folgenden Schritte umfasst:
a) Bereitstellen eines dreidimensionalen Modells des Brillenglases,
b) Digitales Zerschneiden des dreidimensionalen Modells aus Schritt a) in einzelne zweidimensionale Lagen,
c) Bereitstellen wenigstens einer Drucktinte 1, vorzugsweise 3D-Drucktinte 1, , wobei die Drucktinte 1 wenigstens eine strahlungshärtbare Komponente umfasst,
d) Bereitstellen wenigstens einer Drucktinte 2, vorzugsweise 3D-Drucktinte 2, wobei die Drucktinte 2 wenigstens eine strahlungshärtbare Komponente und wenigstens ein Farbmittel umfasst,
e) optional Bereitstellen einer polarisierenden Folie,
f) Aufbau des Brillenglases aus der Summe der einzelnen zweidimensionalen Lagen aus Schritt b) mittels eines Druckvorgangs auf einem Substrat, wobei die Teile des Brillenglases, welche keine farb- und/oder effektgebende Lage umfassen, aus den die Drucktinte 1 umfassenden Volumenelementen, die Teile des Brillenglases, welche wenigstens eine farb- und/oder effektgebende Lage umfassen, aus den die Drucktinte 2 umfassenden Volumenelementen aufgebaut wird, und wobei der Druckvorgang für die Anbringung der optionalen polarisierenden Folie aus Schritt e) unterbrochen und anschließend wieder fortgesetzt wird,
g) Aushärtung des Brillenglases mittels UV-Licht, wobei die Aushärtung nach Aufbringung einzelner Volumenelemente oder nach Aufbringung einer Lage an Volumenelementen jeweils vollständig oder partiell erfolgen kann, und die partielle Aushärtung nach Abschluss des Druckprozesses vervollständigt werden kann,
h) optional Fräsen und/oder Schleifen und/oder Drehen und/oder Polieren des in Schritt g) erhaltenen Brillenglases,
i) optional Nachbeschichtung des in Schritt g) erhaltenen Brillenglases mit einer Funktionsschicht,
j) optional Formranden des in Schritt h) oder in Schritt i) erhaltenen Brillenglases.

Gegenstand der Erfindung ist auch ein Verfahren zur Herstellung einer Brille gemäß Anspruch 14.

Die vorliegende Erfindung bezieht sich ausschließlich auf Brillengläser, nicht auf Kontaktlinsen.

Der Begriff "Brillenglas", wie in der vorliegenden Anmeldung verwendet, umfasst sowohl Brillenglas-Rohlinge, Brillenglas-Halbfertigfabrikate als auch Brillenglas-Fertigfabrikate. Bei Brillenglasrohlingen entsprechen weder die Vorderfläche noch die Rückfläche bereits den fertigen, optisch wirksamen Zielflächen. Brillenglas-Halbfertigfabrikate, auch als Halbfertigfabrikate, Halbfabrikate oder Halbfertigprodukte bezeichnet, sind Linsenrohlinge, deren Vorderfläche bereits die fertige, optisch wirksame Zielfläche ist. Brillenglas-Fertigfabrikate, auch als Fertigfabrikate, Fertigprodukte oder fertige Brillengläser bezeichnet, sind Brillengläser, deren Vorder- und Rückfläche bereits die fertige, optisch wirksame Zielfläche ist. Diese können formgerandet sein oder nicht. Ein formgerandetes Brillenglas ist demnach ein fertiges Brillenglas, das durch Randbearbeitung auf die endgültige, an die Brillenfassung angepasste Größe und Form gebracht wurde. Brillenglas-Halbfertigfabrikate und Brillenglas-Fertigfabrikate weisen jeweils eine für die objektseitige und eine für die gegenüberliegende augenseitige Anordnung für einen Brillenträger bestimmte optische Flächen und eine diese beabstandende Fläche auf. Die für die Anordnung auf der Objektseite bestimmte optische Fläche wird Vorderfläche bezeichnet, die für die Anordnung auf der Augenseite bestimmte optische Fläche wird Rückfläche genannt. Die dazwischen liegende entweder unmittelbar eine Kante bildende oder mittelbar über eine Kantenfläche einendseitig an die Vorderfläche und andernendseitig an die Rückfläche angrenzende Fläche bezeichnet man als Zylinderrandfläche. Erfindungsgemäß werden die Brillengläser mittels einem Druckverfahren, insbesondere 3D-Druckverfahren, hergestellt, unabhängig davon, ob es sich um auftragsspezifische Rezeptbrillengläser, wie beispielsweise individualisierte Einstärkengläser, individualisierte Mehrstärkengläser, individualisierte Gleitsichtgläser, oder um Brillengläser ohne Rezeptwirkung handelt. Vorzugsweise werden erfindungsgemäß Brillenglas-Fertigfabrikate mittels einem Druckverfahren, insbesondere 3D-Druckverfahren, hergestellt. Mittels einem Druckverfahren, insbesondere 3D-Druckverfahren, hergestellte Brillenglas-Fertigfabrikate können wenigstens einen weiteren mechanischen Bearbeitungsschritt, wie beispielsweise Polieren, erfordern. Vorzugsweise benötigen die mittels einem Druckverfahren, insbesondere 3D-Druckverfahren, hergestellten Brillenglas-Fertigfabrikate keinen weiteren mechanischen Bearbeitungsschritt. Mittels einem Druckverfahren, insbesondere 3D-Druckverfahren, hergestellte Brillenglas-Halbfabrikate können wenigstens einen weiteren mechanischen Bearbeitungsschritt, wie beispielsweise Fräsen und/oder Schleifen und/oder Drehen und/oder Polieren erfordern. Mittels Druckverfahren, insbesondere 3D-Druckverfahren, können Brillengläser in wesentlich kürzerer Zeit als über konventionelle Herstellverfahren, wie beispielsweise dem Abgießen in Formschalen, erhalten werden. Bei einer Ausfuhrungsform der Erfindung kann das erfindungsgemäße Brillenglas zusammen mit einer Kunststoffbrillenfassung, vorzugsweise bereits in der Kunststoffbrillenfassung, mittels einem Druckverfahren, insbesondere 3D-Druckverfahren, bereitgestellt werden.

Weiterhin können die erfindungsgemäßen Brillengläser auf der Vorderfläche und/oder auf der Rückfläche mit wenigstens einer Funktionsschicht, wie beispielsweise einer Hartlackschicht, einer Antireflexschicht und/oder einer Antifogschicht, veredelt werden. Die wenigstens eine Funktionsschicht kann hierbei entweder ebenfalls mittels eines Druckverfahrens, insbesondere 3D-Druckverfahrens oder Tintenstrahldruckverfahrens, oder auch mittels konventioneller Nassbeschichtungsprozesse, Tauchbeschichtungsprozesse oder Rotationsbeschichtungsverfahren aufgebracht werden.

Der Begriff "einheitenweise", wie in der vorliegenden Anmeldung verwendet, umfasst die Anordnung wenigstens eines Volumenelements, vorzugsweise einer Vielzahl von Volumenelementen, der Drucktinte, vorzugsweise 3D-Drucktinte, wobei die erste einheitenweise Anordnung wenigstens eines Volumenelements vorzugsweise auf einem Substrat erfolgt. Vorzugsweise erfolgt die einheitenweise Anordnung wenigstens eines Volumenelements lagenweise. Die Verbindung der Volumenelemente erfolgt vorzugsweise mittels UV-Licht.

Der Begriff "Volumenelement", wie in der vorliegenden Anmeldung verwendet, umfasst die Bereitstellung der Drucktinte, vorzugsweise 3D-Drucktinte, nach Ausgabe aus einem Druckkopf, vorzugsweise aus einem für den 3D-Druck geeigneten Druckkopf. Das kleinste mögliche Volumenelement entspricht dem Volumen eines Tropfens Drucktinte, vorzugsweise 3D-Drucktinte.

Der Begriff "lagenweise", wie in der vorliegenden Anmeldung verwendet, umfasst eine aufeinanderfolgende Ablagerung der Drucktinte, vorzugsweise 3D-Drucktinte. Die aufeinanderfolgende Ablagerung kann hierbei sowohl nebeneinander in einer Fläche als auch übereinander in der Höhe erfolgen. Erfolgt beispielsweise eine erste Ablagerung der Drucktinte, vorzugsweise 3D-Drucktinte, in einer Fläche auf vorzugsweise einem Substrat, kann eine weitere Lage über die komplette Fläche der ersten Ablagerung oder einen Teil der Fläche der ersten Ablagerung gedruckt werden. Vorzugsweise erfolgt die aufeinanderfolgende Ablagerung der Drucktinte, vorzugsweise 3D-Drucktinte, zunächst nebeneinander in einer Fläche, bevor dann eine weitere aufeinanderfolgende Ablagerung der Drucktinte, vorzugswiese 3D-Drucktinte, in der darüber liegenden Lage erfolgt. Die Fläche muss hierbei nicht plan sein, sondern kann eine beliebige Form aufweisen.

Der Begriff "Lage", wie in der vorliegenden Anmeldung verwendet, umfasst die nebeneinander Anordnung von Volumenelementen in einer Fläche, wobei die Abmessungen der Volumenelemente unter anderem abhängig von dem Durchmesser der Druckkopfdüsen sind. Es können mehrere Lagen von nebeneinander angeordneten Volumenelementen übereinander angeordnet, d.h. übereinander gedruckt, werden. Die flächenmäßige Ausdehnung und die Anzahl der übereinander zu druckenden Lagen hängt von den gewünschten Abmessungen des zu druckenden Gegenstands, vorzugsweise Brillenglases, ab. Die Aushärtung der einzelnen Lagen kann lagenweise, vorzugsweise mittels UV-Licht, bis zur vollständigen Abreaktion der strahlungshärtbaren Komponente erfolgen. Alternativ kann nach dem Drucken jeder Lage eine nicht komplette Aushärtung, und nach dem Drucken aller Lagen eine endgültige Aushärtung, jeweils vorzugsweise mittels UV-Licht, erfolgen.

Der Begriff "3D-Drucktinte", wie in der vorliegenden Anmeldung verwendet, umfasst eine im 3D-Druckverfahren einsetzbare Drucktinte, welche insbesondere für das 3D-Drucken von Brillengläsern geeignet ist.

Der Begriff "3D-Druckverfahren", wie in der vorliegenden Anmeldung verwendet, umfasst ein additives Herstellungsverfahren, bei welchem die gewünschte Form ausschließlich durch Materialauftrag hergestellt wird. Die dreidimensionale Form des zu druckenden Brillenglases, welche individuell angepasste Aspekte, wie beispielsweise den Durchmesser, die Krümmung, oder individuelle Rezeptwerte, wie beispielsweise eine Progressionsfläche mit vorgegebenem Progressionswert und Verlauf des Progressionskanals berücksichtigt, wird zunächst digital in zweidimensionale, horizontale Lagen geschnitten. Die Information über die einzelnen zweidimensionalen, übereinander zu druckenden Lagen, wird dem Drucker, insbesondere 3D-Drucker, zur Verfügung gestellt und das Brillenglas hiermit aus der Summe der einzelnen zweidimensionalen Lagen aufgebaut. Der Drucker, insbesondere 3D-Drucker, umfasst wenigstens einen Druckkopf, welcher nach dem, aus dem Tintenstrahldruck bekannten Drop on demand Verfahren Volumenelemente über ein piezoelektrisches Element erzeugt und ein Volumenelement immer nur genau an der Stelle platziert, wo dieses auch benötigt wird. Der wenigstens eine Druckkopf kann sich über ein Substrat bewegen und/oder das Substrat kann sich unter dem wenigstens einen Druckkopf bewegen. Vorzugsweise wird als 3D-Druckverfahren das Multi Jet Modeling bzw. Polyjet Verfahren eingesetzt. Als Druckkopf kann beispielsweise der Druckkopf Xaar 1001 (Fa. Xaar), einer der Druckköpfe Spectra S-Class, Spectra SE3, Spectra SX3, Spectra Q-class (Fa. Spectra), der Druckkopf KM512 (Fa. Konica Minolta) und/oder der Druckkopf 256Jet S4 (Fa. Trident) zum Einsatz kommen. Die Auflösung des Druckkopfs beträgt bevorzugt mindestens 300 x 300 dpi, weiter bevorzugt mindestens 600 x 600 dpi und besonders bevorzugt mindestens 1200 x 1200 dpi. Bevorzugt ist an wenigstens einer Seite des eingesetzten Druckkopfs wenigstens eine UV-Lichtquelle, besonders bevorzugt ist an wenigstens zwei Seiten des eingesetzten Druckkopfs wenigstens eine UV-Lichtquelle angebracht. Alternativ können mehrere Druckköpfe parallel in einem 3D-Drucker verbaut und selektiv angesteuert werden. Die UV-Lichtquelle kann dann aus mehreren ebenfalls parallel geschalteten UV-Lichtquellen oder aus wenigen, großen UV-Lichtquellen bestehen.

Der Begriff "farb- und/oder effektgebende Lage", wie in der vorliegenden Anmeldung verwendet, kann sowohl wenigstens eine komplette Lage nebeneinander angeordneter Volumenelemente umfassend eine Drucktinte mit wenigstens einem Farbmittel als auch einzelne nebeneinander angeordnete Volumenelemente umfassend eine Drucktinte mit wenigstens einem Farbmittel, jeweils innerhalb eines Brillenglases umfassen. Einzelne nebeneinander angeordnete Volumenelemente können beispielsweise zu Schriftzügen oder Mustern innerhalb eines Brillenglases führen.

Als zu bedruckendes Substrat kann jedes Substrat verwendet werden, von dem das gedruckte Brillenglas abgelöst werden kann. Das Substrat kann hierbei in einer ebenen Fläche liegen, so dass, sofern keine plane Oberfläche des Brillenglases erwünscht ist, wenigstens die Vorderfläche oder die Rückfläche des Brillenglases wenigstens einen weiteren Bearbeitungsschritt, wie Fräsen, Schleifen, Drehen und/oder Polieren erfordern. Alternativ kann das Substrat die Negativform der Vorderfläche oder der Rückfläche des Brillenglases haben. Für den Fall, dass die Negativform des Substrats der Vorderfläche des Brillenglases entspricht, ist nach dem Ablösen des Brillenglases vom Substrat vorzugsweise nur ein Polieren der Oberfläche der Vorderfläche notwendig. Entsprechendes gilt selbstverständlich auch für die Rückfläche. Besonders bevorzugt ist nach dem Ablösen des Brillenglases vom Substrat kein weiterer mechanischer Bearbeitungsschritt mehr erforderlich.

Die Ablösung des gedruckten Brillenglases vom Substrat kann mechanisch, beispielsweise mittels eines Spachtels, Meißels oder Schraubenziehers erfolgen. Alternativ kann das zu bedruckende Substrat in Gänze aus einem Material mit schlechten Haftungseigenschaften bestehen oder alternativ an der Oberfläche mit einer Trennschicht beschichtet sein, welches die Ablösung des Brillenglases vom Substrat erleichtert.

Das Substrat kann beispielsweise aus Polytetrafluorethylen, Glas oder Metall gefertigt sein. Bei einer Ausführungsform kann das Substrat eine Trennschicht umfassend Alkyltrihalogensilane, bevorzugt C₁₂ bis C₂₂ Alkyltrichlorsilane und ganz bevorzugt Octadecyltrichlorsilan aufweisen.

Das Substrat kann plan, sphärisch, asphärisch oder unsymmetrisch geformt sein. Sphärisch definiert eine Substratfläche, die den gleichen Radius über die Fläche aufweist und rotationssymmetrisch ist. Asphärisch definiert eine Substratfläche, die rotationssymmetrisch ist, aber keinen konstanten Radius aufweist. Die unsymmetrische Substratfläche ist weder rotationssymmetrisch noch mit einem definierbaren Radius ausgestattet.

Alternativ zum Drucken, insbesondere 3D-Drucken, auf einem Substrat kann das Brillenglas auch mithilfe einer Stützstruktur gedruckt werden, wobei die Stützstruktur vorzugsweise nur an den benötigen Stellen auf ein Substrat gedruckt wird und als Negativ für das Brillenglas dient. Die Stützstruktur kann eine sphärische, asphärische oder unsymmetrische Form bilden. Die Stützstruktur wird vorzugsweise zusammen mit dem gedruckten Brillenglas mechanisch oder chemisch vom Substrat abgelöst. Die Stützstruktur lässt sich vom erfindungsgemäß gedruckten Brillenglas mechanisch oder chemisch ablösen. Als Verfahren zum Entfernen der Stützstruktur kommen beispielsweise Abwaschen mit Wasser und/oder einem Lösungsmittel und/oder Ultraschallbehandlung in Frage. Die Behandlung darf das Brillenglas nicht beeinträchtigen. Als Stützstruktur kann beispielsweise das von einem Hersteller eines 3D-Druckers mitgelieferte Stützmaterial eingesetzt werden. Gemäß US 2016009917 A1 können die wasserlöslichen Stützstrukturen beispielsweise Glycolpolymere, beispielsweise Polyethylenglykol mit einem Molekulargewicht aus einem Bereich von 1000 bis 6000, niedermolekulare polare Komponenten, wie beispielsweise Diole, z.B. 1,8-Octandiol oder Polyole, sowie optional oberflächenaktive Substanzen umfassen.

Die erfindungsgemäß einsetzbare Drucktinte, vorzugsweise 3D-Drucktinte, umfasst wenigstens eine strahlungshärtbare Komponente, optional wenigstens ein Farbmittel, optional wenigstens einen UV-Initiator, optional wenigstens ein Lösungsmittel und optional wenigstens ein Additiv.

Die strahlungshärtbare Komponente, vorzugsweise UV-härtbare Komponente, umfasst bevorzugt (Meth)acrylatmonomere, Epoxymonomere, Vinyl- und Allylmonomere, besonders bevorzugt (Meth)acrylatmonomere. Bei den (Meth)acrylatmonomeren kann es sich bevorzugt um monofunktionale, difunktionale, trifunktionale und/oder tetrafunktionale (Meth)acrylatmonomere handeln. Bei den Epoxymonomeren kann es sich bevorzugt um monofunktionale, difunktionale, trifunktionale und/oder tetrafunktionale Epoxymonomere handeln. Bei den Vinyl- und Allylmonomere kann es sich bevorzugt um monofunktionale, difunktionale, trifunktionale und/oder tetrafunktionale Vinyl- und Allylmonomere handeln.

Bei einer Ausführungsform weisen die als strahlungshärtbare Komponente, vorzugsweise UV-härtbare Komponente, einsetzbaren monofunktionalen (Meth)acrylatmonomere, Epoxymonomere, Vinyl- und Allylmonomere bevorzugt eine Viskosität aus einem Bereich von 0,5 mPa·s bis 30,0 mPa·s, besonders bevorzugt aus einem Bereich von 1,0 mPa·s bis 25,0 mPa·s und ganz besonders bevorzugt aus einem Bereich von 1,5 mPa·s bis 20,0 mPa·s auf.

Bei einer Ausführungsfonn weisen die als strahlungshärtbare Komponente, vorzugsweise UV-härtbare Komponente, einsetzbaren difunktionalen (Meth)acrylatmonomere, Epoxymonomere, Vinyl- und Allylmonomere bevorzugt eine Viskosität aus einem Bereich von 1,5 mPa-s bis 17,0 mPa-s, besonders bevorzugt aus einem Bereich von 2,5 mPa·s bis 14,0 mPa·s und ganz besonders bevorzugt aus einem Bereich von 3,0 mPa·s bis 11,0 mPa·s auf.

Bei einer Ausführungsfonn weisen die als strahlungshärtbare Komponente, vorzugsweise UV-härtbare Komponente, einsetzbaren trifuntionktionellen (Meth)acrylatmonomere, Epoxymonomere, Vinyl- und Allylmonomere bevorzugt eine Viskosität aus einem Bereich von 20,0 mPa-s bis 110,0 mPa·s, besonders bevorzugt aus einem Bereich von 22,0 mPa-s bis 90,0 mPa-s und ganz besonders bevorzugt aus einem Bereich von 24,0 mPa-s bis 83,0 mPa-s auf.

Bei einer Ausfiihrungsfonn weisen die als strahlungshärtbare Komponente, vorzugsweise UV-härtbare Komponente, einsetzbaren tetrafunktionalen (Meth)acrylatmonomere, Epoxymonomere, Vinyl- und Allylmonomere bevorzugt eine Viskosität aus einem Bereich von 60,0 mPa-s bis 600,0 mPa-s, besonders bevorzugt aus einem Bereich von 70,0 mPa·s bis 460,0 mPa·s und ganz besonders bevorzugt aus einem Bereich von 80,0 mPa·s bis 270,0 mPa·s auf.

Die Viskosität der (Meth)acrylatmonomere, Epoxymonomere, Vinyl- und Allylmonomere wird jeweils vorzugsweise mit einem Rheometer C-VOR 150 der Fa. Malvern mit der Vorgabe einer Winkelgeschwindigkeit von 5,2 rad/sec bei 25°C gemessen.

Die jeweiligen (Meth)acrylatmonomere, Epoxymonomere, Vinyl- und Allylmonomere können jeweils beispielsweise durch Zugabe wenigstens eines Lösungsmittels auf die gewünschte Viskosität eingestellt werden.

Die Viskosität der erfindungsgemäß einsetzbaren Drucktinte, vorzugsweise 3D-Drucktinte, kann beispielsweise durch Mischung verschiedener (Meth)acrylatmonomere, Epoxymonomere, Vinyl- und/oder Allylmonomere, beispielsweise durch Mischung monofunktionaler (Meth)acrylatmonomere, Epoxymonomere, Vinyl- und/oder Allylmonomere und difunktionaler (Meth)acrylatmonomere, Epoxymonomere, Vinyl- und/oder Allylmonomere und/oder trifunktionaler (Meth)acrylatmonomere, Epoxymonomere, Vinyl- und/oder Allylmonomere, eingestellt werden. Alternativ oder zusätzlich zur Mischung verschiedener (Meth)acrylatmonomere, Epoxymonomere, Vinyl- und/oder Allylmonomere kann die Viskosität durch Zugabe wenigstens eines Lösungsmittels eingestellt werden.

Als monofunktionale (Meth)acrylatmonomere können beispielsweise Acrylsäure (CAS Nr. 79-10-7), Methacrylsäure (CAS Nr. 79-41-4), Methylacrylat (CAS Nr. 96-33-3), Methylmethacrylat (CAS Nr. 80-62-6), Ethylacrylat (CAS Nr. 140-88-5), Ethylmethacrylat (CAS Nr. 97-63-2), Ethyl-2-ethylacrylat (CAS Nr. 3070-65-3), (2,2-dimethyl-1,3-dioxolan-4-yl)methylmethacrylat (CAS Nr. 7098-80-8), 2-Phenoxyethylacrylat (CAS Nr. 48145-04-6), Isobornylacrylat (CAS Nr. 5888-33-5), 2-(2-Methoxyethoxy)ethylmethacrylat (CAS Nr. 45103-58-0), 4-Acryloylmorpholin (CAS Nr. 5117-12-4), Dodecylacrylat (CAS Nr. 2156-97-0), Isodecylacrylat (CAS Nr. 1330-61-6), Decylacrylat (CAS Nr. 2156-96-9), n-Octylacrylat (CAS Nr. 2499-59-4), Isooctylacrylat (CAS Nr. 29590-42-9), Octadecylacrylat (CAS Nr. 4813-57-4), Tetrahydrofurfurylacrylat (CAS Nr. 2399-48-6), 2-(2-Ethoxyethoxy)ethylacrylat (CAS Nr. 7328-17-8), 4-tert-Butylcyclohexylacrylat (CAS Nr. 84100-23-2), Methoxypoly(ethylenglycol)monoacrylat (CAS Nr. 32171-39-4), Phenoxypolyethylenglycolacrylat (CAS Nr. 56641-05-5), Mono-2-(acryloyloxy)ethylsuccinat (CAS Nr. 50940-49-3), Allylmethacrylat (CAS Nr. 96-05-9) oder Mischungen davon eingesetzt werden.

Bevorzugt werden als monofunktionale (Meth)acrylatmonomere Acrylsäure, Methacrylsäure, Methylacrylat, Methylmethacrylat, Ethylacrylat, Ethylmethacrylat, 2-Phenoxyethylacrylat, Dodecylacrylat oder Mischungen davon, besonders bevorzugt werden Methacrylsäure, Methylmethacrylat, Ethylmethacrylat oder Mischungen davon eingesetzt.

Als difunktionale (Meth)acrylatmonomere können beispielsweise Ethylenglykoldiacrylat (CAS Nr. 2274-11-5), Diethylenglykoldiacrylat (CAS Nr. 2274-11-5), Triethylenglykoldiacrylat (CAS Nr. 1680-21-3), Tetraethylenglykoldiacrylat (CAS Nr. 17831-71-9), Ethylenglykoldimethacrylat (CAS Nr. 97-90-5), Diethylenglykoldimethacrylat (CAS Nr. 2358-84-1), Triethylenglykoldimethacrylat (CAS Nr. 109-16-0), Tetraethylenglycoldimethacrylat (CAS Nr. 109-17-1), Polyethylenglykol 200 dimethacrylat (CAS Nr. 25852-47-2), Dipropylenglykoldiacrylat (CAS Nr. 57472-68-1), Tripropylenglykoldiacrylat (CAS Nr. 42978-66-5), 1,3-Butandioldiacrylat (CAS Nr. 19485-03-1), 1,4-Butandioldiacrylat (CAS Nr. 1070-70-8), 1,6-Hexandioldiacrylat (CAS Nr. 13048-33-4), Neopentylglycoldiacrylat (CAS Nr. 2223-82-7), 1,3-Butandioldimethacrylat (CAS Nr. 1189-08-8), 1,4-Butandioldimethacrylat (CAS Nr. 2082-81-7), 1,6-Hexandioldimethacrylat (CAS Nr. 6606-59-3) oder Mischungen davon eingesetzt werden.

Bevorzugt werden als difunktionale (Meth)acrylatmonomere Polyethylenglykol 200 dimethacrylat, Ethylenglykoldimethacrylat, Diethylenglykoldimethacrylat, 1,4-Butandioldimethacrylat oder Mischungen davon, besonders bevorzugt werden Ethylenglykoldimethacrylat, Diethylenglykoldimethacrylat oder Mischungen davon eingesetzt.

Als trifunktionale (Meth)acrylatmonomere können beispielsweise Trimethylolpropantrimethacrylat (CAS Nr. 3290-92-4), Trimethylolpropantriacrylat (CAS Nr. 15625-89-5), Pentaerythritoltriacrylat (CAS Nr. 3524-68-3), Pentaerythritolpropoxylattriacrylat (CAS Nr. 145611-81-0), Trimethylolpropanpropoxylattriacrylat (CAS Nr. 53879-54-2), Trimethylolpropanethoxylattriacrylat (CAS Nr. 28961-43-5) oder Mischungen davon eingesetzt werden.

Bevorzugt werden als trifunktionale (Meth)acrylatmonomere Trimethylolpropantrimethacrylat, Pentaerythritoltriacrylat oder Mischungen davon, besonders bevorzugt wird Trimethylolpropantrimethacrylat eingesetzt.

Als tetrafunktionale (Meth)acrylatmonomere können beispielsweise Di(trimethylolpropan)tetraacrylat (CAS Nr. 94108-97-1), Pentaerythritoltetraacrylat (CAS Nr. 4986-89-4), Pentaerythritoltetramethacrylat (CAS Nr. 3253-41-6) oder Mischungen davon eingesetzt werden.

Bevorzugt werden als tetrafunktionale (Meth)acrylatmonomere Di(trimethylolpropan)tetraacrylat, Pentaerythritoltetramethacrylat oder Mischungen davon, besonders bevorzugt Di(trimethylolpropan)tetraacrylat eingesetzt.

Als monofunktionale Epoxymonomere können beispielsweise Ethylglycidylether (CAS Nr. 4016-11-9), n-Butylglycidylether (CAS Nr. 2426-08-6), 2-Ethylhexylglycidylether (CAS Nr. 2461-15-6), C8-C10-Glycidylether (CAS Nr. 68609-96-1), C12-C14-Glycidylether (CAS Nr. 68609-97-2), Cresylglycidylether (CAS Nr. 2210-79-9), p-tert-Butylphenylglycidylether (CAS Nr. 3101-60-8), Nonylphenylglycidylether (CAS Nr. 147094-54-0), Benzylglycidylether (CAS Nr. 2930-05-4), Phenylglycidylether (CAS Nr. 122-60-1), Bisphenol A-(2,3-dihydroxypropyl)glycidylether (CAS Nr. 76002-91-0) oder Mischungen davon zum Einsatz kommen.

Bevorzugt kommen als monofunktionale Epoxymonomere Ethylglycidylether, n-Butylglycidylether, 2-Ethylhexylglycidylether oder Mischungen hiervon, besonders bevorzugt Ethylglycidylether, n-Butylglycidylether oder Mischungen hiervon zum Einsatz.

Als difunktionale Epoxymonomere können beispielsweise Diglycidylether (CAS Nr. 2238-07-5), Ethylenglycoldiglycidylether (CAS Nr. 2224-15-9), Diethylenglykoldiglycidylether (CAS Nr. 4206-61-5), Propylenglykoldiglycidylether (CAS Nr. 16096-30-3), Dipropylenglycoldiglycidylether (CAS Nr. 41638-13-5), 1,4-Butandioldiglycidylether (CAS Nr. 2425-79-8), 1,4-Cyclohexandimethanoldiglycidylether (CAS Nr. 14228-73-0), Neopentylglycoldiglycidylether (CAS Nr. 17557-23-2), Polypropylenglycol(400)diglycidylether (CAS Nr. 26142-30-3), 1,6-Hexandioldiglycidylether (CAS Nr. 16096-31-4), Bisphenol A-diglycidylether (CAS Nr. 1675-54-3), Bisphenol-A-propoxylat-diglycidylether (CAS Nr. 106100-55-4), Polyethylenglykoldiglycidylether (CAS Nr. 72207-80-8), Glyceroldiglycidylether (CAS Nr. 27043-36-3), Resorcinoldiglycidylether (CAS Nr. 101-90-6) oder Mischungen davon in der erfindungsgemäß einsetzbaren Drucktinte, vorzugsweise 3D-Drucktinte, verwendet werden.

Bevorzugt kommen als difunktionale Epoxymonomere Diglycidylether, Ethylenglycoldiglycidylether, Diethylenglykoldiglycidylether, 1,4-Butandioldiglycidylether, Polyethylenglykoldiglycidylether, Polypropylenglycol(400)diglycidylether oder Mischungen hiervon, besonders bevorzugt Ethylenglycoldiglycidylether, Diethylenglykoldiglycidylether, 1,4-Butandioldiglycidylether, Polyethylenglykoldiglycidylether oder Mischungen hiervon zum Einsatz.

Als trifunktionale Epoxymonomere können beispielsweise Trimethylolethantriglycidylether (CAS Nr. 68460-21-9), Trimethylolpropantriglycidylether (CAS Nr. 30499-70-8), Triphenylolmethantriglycidylether (CAS Nr. 66072-38-6), Tris(2,3-epoxypropyl)isocyanurat (CAS Nr. 2451-62-9), Tris(4-hydroxyphenyl)methantriglycidylether (CAS Nr. 66072-38-6), 1,1,1-Tris(4-hydroxyphenyl)ethantriglycidylether (CAS Nr. 87093-13-8), Glyceroltriglycidylether (CAS Nr. 13236-02-7), Glycerolpropoxylattriglycidylether (CAS Nr. 37237-76-6), N,N-Diglycidyl-4-glycidyloxyanilin (CAS Nr. 5026-74-4) oder Mischungen davon eingesetzt werden.

Bevorzugt kommen als trifunktionale Epoxymonomere Trimethylolpropantriglycidylether, Tris(2,3-epoxypropyl)isocyanurat, Glyceroltriglycidylether, Glycerolpropoxylattriglycidylether oder Mischungen hiervon, besonders bevorzugt Tris(2,3-epoxypropyl)isocyanurat, Glyceroltriglycidylether oder Mischungen hiervon zum Einsatz.

Als tetrafunktionale Epoxymonomere können beispielsweise Pentaerythritoltetraglycidylether, (CAS Nr. 3126-63-4), Dipentaerythritoltetraglycidylether, Tetraglycidylbenzylethan, Sorbitoltetraglycidylether, Tetraglycidyldiaminophenylmethan, Tetraglycidylbisaminomethylcyclohexan oder Mischungen davon zum Einsatz kommen.

Bevorzugt werden als tetrafunktionale Epoxymonomere Pentaerythritoltetraglycidylether, (CAS Nr. 3126-63-4), Dipentaerythritoltetraglycidylether, Sorbitoltetraglycidylether oder Mischungen davon, besonders bevorzugt Pentaerythritoltetraglycidylether, (CAS Nr. 3126-63-4), Dipentaerythritoltetraglycidylether oder Mischungen davon eingesetzt.

Umfasst die strahlungshärtbare Komponente der erfindungsgemäß einsetzbaren Drucktinte, vorzugsweise 3D-Drucktinte, monofunktionale Vinylmonomere so können diese beispielweise Ethylenglycolvinylether (CAS Nr. 764-48-7), Di(ethylenglycol)vinylether (CAS Nr. 929-37-3), 1-Vinylcyclohexanol (CAS Nr. 1940-19-8), Vinylacetat (CAS Nr. 108-05-4), Vinylchlorid (CAS Nr. 75-01-4), Ethylvinylketon (CAS Nr. 1629-58-9), Butylvinylether (CAS Nr. 111-34-2), 1,4-Butandiolvinylether (CAS Nr. 17832-28-9), Vinylacrylat (CAS Nr. 2177-18-6), Vinylmethacrylat (CAS Nr. 4245-37-8), Isobutylvinylether (CAS Nr. 109-53-5), Vinylpivalat (CAS Nr. 3377-92-2), Vinylbenzoat (CAS Nr. 769-78-8), Vinylvalerat (CAS Nr. 5873-43-8), 2-Ethylhexylvinylether (CAS Nr. 103-44-6), Phenylvinylether (CAS Nr. 766-94-9), tert-Butylvinylether (CAS Nr. 926-02-3), Cyclohexylvinylether (CAS Nr. 2182-55-0), Dodecylvinylether (CAS Nr. 765-14-0), Ethylvinylether (CAS Nr. 109-92-2), Propylvinylether (CAS Nr. 764-47-6), 1,4-Cyclohexandimethanolvinylether (CAS Nr. 114651-37-5) oder Mischungen hiervon umfassen.

Bevorzugt werden als monofunktionale Vinylmonomere Ethylenglycolvinylether, Di(ethylenglycol)vinylether, Ethylvinylketon, Vinylacetat, Phenylvinylether, Cyclohexylvinylether oder Mischungen hiervon, besonders bevorzugt Ethylvinylketon, Vinylacetat, Ethylenglycolvinylether oder Mischungen hiervon eingesetzt.

Als difunktionale Vinylmonomere können beispielsweise Di(ethylenglycol)divinylether (CAS Nr. 764-99-8), Tri(ethylenglycol)divinylether (CAS Nr. 765-12-8), Tetra(ethylenglycol)divinylether (CAS Nr. 83416-06-2), Poly(ethylenglycol)divinylether (CAS Nr. 50856-26-3), Tri(ethylenglycol)divinylether (CAS Nr. 765-12-8), Divinylbenzol (CAS Nr. 1321-74-0), 1,4-Butandioldivinylether (CAS Nr. 3891-33-6), 1,6-Hexandioldivinylether (CAS Nr. 19763-13-4), 1,4-Cyclohexandimethanoldivinylether (CAS Nr. 17351-75-6), 1,4-Pentadien-3-ol (CAS Nr. 922-65-6) oder Mischungen hiervon zum Einsatz kommen.

Bevorzugt werden als difunktionale Vinylmonomere Di(ethylenglycol)divinylether, 1,4-Cyclohexandimethanoldivinylether, Poly(ethylenglycol)divinylether, Divinylbenzol oder Mischungen hiervon, besonders bevorzugt 1,4-Cyclohexandimethanoldivinylether, Divinylbenzol, Di(ethylenglycol)divinylether oder Mischungen hiervon als strahlungshärtbare Komponente in der erfindungsgemäß einsetzbaren Drucktinte, vorzugsweise 3D-Drucktinte, eingesetzt.

Als trifunktionale bzw. tetrafunktionale Vinylmonomere können beispielsweise 1,3,5-Trivinylbenzol, 1,2,4-Trivinylcyclohexan (CAS Nr. 2855-27-8), 1,3,5-Trivinyl-1,3,5-triazinan-2,4,6-trion, 1,3,5-Trivinyl-1,3,5-trimethylcylcotrisiloxan (CAS Nr. 3901-77-7), 2,4,6-Trimethyl-2,4,6-trivinylcyclotrisilazan (CAS Nr. 5505-72-6), 2,4,6-Trivinylcyclotriboroxanpyridin-Komplex (CAS Nr. 442850-89-7), Tetravinylsilan (CAS Nr. 1112-55-6), 2,4,6,8-Tetramethyl-2,4,6,8-tetravinylcyclotetrasiloxan (CAS Nr. 2554-06-5) oder Mischungen davon eingesetzt werden.

Bevorzugt werden als trifunktionale bzw. tetrafunktionale Vinylmonomere 1,3,5-Trivinylbenzol, 1,2,4-Trivinylcyclohexan, Tetravinylsilan oder Mischungen hiervon, besonders bevorzugt 1,3,5-Trivinylbenzol, 1,2,4-Trivinylcyclohexan oder Mischungen hiervon eingesetzt.

Weiterhin kann die erfindungsgemäß einsetzbaren Drucktinte, vorzugsweise 3D-Drucktinte, monofunktionale Allylmonomere, wie beispielsweise Allylacetat (CAS Nr. 591-87-7), Allylacetoacetat (CAS Nr. 1118-84-9), Allylalkohol (CAS Nr. 107-18-6), Allylbenzylether (CAS Nr. 14593-43-2), Allylbutylether (CAS Nr. 3739-64-8), Allylbutyrat (CAS Nr. 2051-78-7), Allylethylether (CAS Nr. 557-31-3), Ethylenglycolallylether (CAS Nr. 111-45-5), Allylphenylether (CAS Nr. 1746-13-0), Trimethylolpropanallylether (CAS Nr. 682-11-1), 2-Allyloxyethanol (CAS Nr. 111-45-5), 3-Allyloxy-1,2-propandiol (CAS Nr. 123-34-2) oder Mischungen hiervon umfassen.

Bevorzugt werden als monofunktionale Allylmonomere Allylacetat, Allylalkohol, Ethylenglycolallylether, Allyloxyethanol oder Mischungen hiervon, besonders bevorzugt Allylacetat, Allylalkohol, Ethylenglycolallylether oder Mischungen hiervon umfassen.

Als difunktionale Allylmonomere können beispielsweise Allylether (CAS Nr. 557-40-4), 2,2`-Diallylbisphenol A (CAS Nr. 1745-89-7), 2,2'-Diallylbisphenol A diacetatether (CAS Nr. 1071466-61-9), Trimethylolpropandiallylether (CAS Nr. 682-09-7), Diallylcarbonat (CAS Nr. 15022-08-9), Diallylmaleat (CAS Nr. 999-21-3), Diallylsuccinat (CAS Nr. 925-16-6), Diallylphthalat (CAS Nr. 131-17-9), Di(ethylenglycol)bis(allylcarbonat) (CAS Nr. 142-22-3) oder Mischungen davon eingesetzt werden.

Bevorzugt werden als difunktionale Allylmonomere Allylether, 2,2'-Diallylbisphenol A, Diallylcarbonat, Diallylsuccinat, Di(ethylenglycol)bis(allylcarbonat), Diallylmaleat oder Mischungen davon, besonders bevorzugt Allylether, 2,2'-Diallylbisphenol A, Diallylcarbonat, Diethylenglykoldiallylcarbonat oder Mischungen davon eingesetzt.

Als trifunktionale bzw. tetrafunktionale Allylmonomere können beispielsweise 2,4,6-Triallyloxy-1,3,5-triazin (CAS Nr. 101-37-1), 1,3,5-Triallyl-1,3,5-triazin-2,4,6(1H,3H,SH)-trion (CAS Nr. 1025-15-6), 3-(N,N',N'-Triallylhydrazin)propionsäure, Pentaerythritolallylether (CAS Nr. 91648-24-7), 1,1,2,2-Tetraallyloxyethan (CAS Nr. 16646-44-9), Tetraallylpyromellitat (CAS Nr. 13360-98-0) oder Mischungen davon eingesetzt werden.

Bevorzugt werden als trifunktionale bzw. tetrafunktionale Allylmonomere 2,4,6-Triallyloxy-1,3,5-triazin, Pentaerythritolallylether, 1,3,5-Triallyl-1,3,5-triazin-2,4,6(1H,3H,5H)-trion oder Mischungen davon, besonders bevorzugt 2,4,6-Triallyloxy-1,3,5-triazin, Pentaerythritolallylether oder Mischungen davon eingesetzt.

Erfindungsgemäß erfolgt die Auswahl an zu verwendenden strahlungshärtenden Komponenten so, dass ausreichend vernetzbare, aber dennoch schnell aushärtende Monomermischungen erhalten werden können.

Der Gesamtanteil an wenigstens einer strahlungshärtbaren Komponente in der erfindungsgemäß einsetzbaren Drucktinte, vorzugsweise 3D-Drucktinte, liegt bevorzugt in einem Bereich von 11,0 Gew.-% bis 99,5 Gew.-%, weiter bevorzugt in einem Bereich von 17 Gew.-% bis 99 Gew.-%, besonders bevorzugt in einem Bereich von 31 Gew.-% bis 98,5 Gew.-% und ganz besonders bevorzugt in einem Bereich von 40 Gew.-% bis 98 Gew.-%, jeweils bezogen auf das Gesamtgewicht der Drucktinte, vorzugsweise 3D-Drucktinte. Vorstehend aufgeführte Bereiche gelten sowohl für die Verwendung von ausschließlich monofunktionalen, ausschließlich difunktionalen, ausschließlich trifunktionalen, ausschließlich tetrafunktionalen strahlungshärtbaren Komponenten als auch für die Verwendung von Mischungen strahlungshärtbarer Komponenten ausgewählt aus der Gruppe bestehend aus monofunktionalen, difunktionalen, trifunktionalen und tetrafunktionalen strahlungshärtbaren Komponenten. Vorstehend aufgeführte Bereiche gelten weiterhin sowohl für die Verwendung von ausschließlich (Meth)acrylatmonomeren, Epoxymonomeren, Vinyl- oder Allylmonomeren als auch für die Verwendung von Mischungen hiervon. Beispielsweise kann wenigstens ein monofunktionales (Meth)acrylatmonomer mit wenigstens einem trifunktionalen Epoxymonomer in Mischung vorliegen.

Der Gesamtanteil an wenigstens einer Art an monofunktionalem (Meth)acrylatmonomer Epoxymonomer, Vinyl- oder Allylmonomer liegt in der erfindungsgemäß einsetzbaren Drucktinte, vorzugsweise 3D-Drucktinte, bevorzugt in einem Bereich von 0,0 Gew.-% bis 60,0 Gew.-%, weiter bevorzugt in einem Bereich von 0,3 Gew.-% bis 51,0 Gew.-%, besonders bevorzugt in einem Bereich von 1,2 Gew.-% bis 44,0 Gew.-% und ganz besonders bevorzugt in einem Bereich von 1,8 Gew.-% bis 35,0 Gew.-%, jeweils bezogen auf das Gesamtgewicht der Drucktinte, vorzugsweise 3D-Drucktinte. Vorstehend genannte Bereiche gelten sowohl für die Verwendung einer Art an monofunktionalem (Meth)acrylatmonomer, Epoxymonomer, Vinyl- oder Allylmonomer als auch für die Verwendung einer Mischung voneinander verschiedener monofunktionaler (Meth)acrylatmonomere, Epoxymonomere, Vinyl- oder Allylmonomere. Beispielsweise kann wenigstens eine Art monofunktionales (Meth)acrylatmonomer mit wenigstens einer Art monofunktionalem Allylmonomer oder wenigstens eine Art monofunktionales (Meth)acrylatmonomer mit wenigstens einer hiervon verschiedenen Art an monofunktionalem (Meth)acrylatmonomer jeweils in Mischung vorliegen.

Bei einer bevorzugten Ausführungsform umfasst die erfindungsgemäß einsetzbare Drucktinte, vorzugsweise 3D-Drucktinte, kein monofunktionales (Meth)acrylatmonomer, Epoxymonomer, Vinyl- oder Allylmonomer.

Der Gesamtanteil an wenigstens einer Art an difunktionalem (Meth)acrylatmonomer, Epoxymonomer, Vinyl- oder Allylmonomer liegt in der erfindungsgemäß einsetzbaren Drucktinte, vorzugsweise 3D-Drucktinte, bevorzugt in einem Bereich von 32,0 Gew.-% bis 99,0 Gew.-%, weiter bevorzugt in einem Bereich von 39,0 Gew.-% bis 97,0 Gew.-%, besonders bevorzugt in einem Bereich von 47,0 Gew.-% bis 95,0 Gew.-% und ganz besonders bevorzugt in einem Bereich von 56,0 Gew.-% bis 93,0 Gew.-%, jeweils bezogen auf das Gesamtgewicht der Drucktinte, vorzugsweise 3D-Drucktinte. Vorstehend genannte Bereiche gelten sowohl für die Verwendung einer Art an difunktionalem (Meth)acrylatmonomer, Epoxymonomer, Vinyl- oder Allylmonomer als auch für die Verwendung einer Mischung voneinander verschiedener difunktionaler (Meth)acrylatmonomere, Epoxymonomere, Vinyl- oder Allylmonomere. Beispielsweise kann wenigstens eine Art an difunktionalem (Meth)acrylatmonomer mit wenigstens einer Art an difunktionalem Epoxymonomer in Mischung vorliegen oder es kann sich um eine Mischung aus zwei voneinander verschiedenen Arten monofunktionaler (Meth)acrylatmonomere handeln.

Der Gesamtanteil an wenigstens einer Art an trifunktionalem (Meth)acrylatmonomer, Epoxymonomer, Vinyl- oder Allylmonomer liegt in der erfindungsgemäß einsetzbaren Drucktinte, vorzugsweise 3D-Drucktinte, bevorzugt in einem Bereich von 1,0 Gew.-% bis 51,0 Gew.-%, weiter bevorzugt in einem Bereich von 2,0 Gew.-% bis 43,0 Gew.-%, besonders bevorzugt in einem Bereich von 3,0 Gew.-% bis 36,0 Gew.-% und ganz besonders bevorzugt in einem Bereich von 4,0 Gew.-% bis 31,0 Gew.-%, jeweils bezogen auf das Gesamtgewicht der Drucktinte, vorzugsweise 3D-Drucktinte. Vorstehend genannte Bereiche gelten sowohl für die Verwendung einer Art an trifunktionalem (Meth)acrylatmonomer, Epoxymonomer, Vinyl- oder Allylmonomer als auch für die Verwendung einer Mischung voneinander verschiedener trifunktionaler (Meth)acrylatmonomere, Epoxymonomere, Vinyl- oder Allylmonomere. Beispielsweise kann wenigstens eine Art an trifunktionalem (Meth)acrylatmonomer mit wenigstens einer Art an trifunktionalem Vinylmonomer oder wenigstens eine Art an trifunktionalem (Meth)acrylatmonomer mit wenigstens einer davon verschiedenen Art an trifunktionalem (Meth)acrylatmonomer jeweils in Mischung vorliegen.

Der Gesamtanteil an wenigstens einer Art an tetrafunktionalem (Meth)acrylatmonomer, Epoxymonomer, Vinyl- oder Allylmonomer liegt in der erfindungsgemäß einsetzbaren Drucktinte, vorzugsweise 3D-Drucktinte, bevorzugt in einem Bereich von 0 Gew.-% bis 16 Gew.-%, weiter bevorzugt in einem Bereich von 0 bis 13 Gew.-%, besonders bevorzugt in einem Bereich von 0,1 Gew.-% bis 9 Gew.-% und ganz besonders bevorzugt in einem Bereich von 0,4 Gew-% bis 4 Gew.-%, jeweils bezogen auf das Gesamtgewicht der Drucktinte, vorzugsweise 3D-Drucktinte. Vorstehend genannte Bereiche gelten sowohl für die Verwendung einer Art an tetrafunktionalem (Meth)acrylatmonomer, Epoxymonomer, Vinyl- oder Allylmonomer als auch für die Verwendung einer Mischung voneinander verschiedener tetrafunktionaler (Meth)acrylatmonomere, Epoxymonomere, Vinyl- oder
Allylmonomere. Beispielsweise kann wenigstens eine Art an tetrafunktionalem (Meth)acrylatmonomer mit wenigstens einer weiteren, hiervon verschiedenen Art an tetrafunktionalem (Meth)acrylatmonomer in Mischung vorliegen oder es kann sich um eine Mischung an wenigstens einer Art an tetrafunktionalem (Meth)acrylatmonomer mit wenigstens einer Art an tetrafunktionalem Allylmonomer handeln.

Bei einer bevorzugten Ausführungsform umfasst die erfindungsgemäß einsetzbare Drucktinte, vorzugsweise 3D-Drucktinte, wenigstens eine monofunktionale strahlungshärtbare Komponente und wenigstens eine difunktionale strahlungshärtbare Komponente bevorzugt im Gewichtsverhältnis 1 : 1, besonders bevorzugt im Gewichtsverhältnis 1 : 5 und ganz besonders bevorzugt im Gewichtsverhältnis 1 : 10.

Bei einer weiteren Ausführungsform umfasst die erfindungsgemäß einsetzbare Drucktinte, vorzugsweise 3D-Drucktinte, wenigstens eine monofunktionale strahlungshärtbare Komponente und wenigstens eine trifunktionale strahlungshärtbare Komponente bevorzugt im Gewichtsverhältnis 1 : 5, besonders bevorzugt im Gewichtsverhältnis 1 : 3 und ganz besonders bevorzugt im Gewichtsverhältnis 1 : 1.

Bei einer weiteren Ausführungsform umfasst die erfindungsgemäß einsetzbare Drucktinte, vorzugsweise 3D-Drucktinte, wenigstens eine difunktionale strahlungshärtbare Komponente und wenigstens eine trifunktionale strahlungshärtbare Komponente im Gewichtsverhältnis 1 : 1, besonders bevorzugt im Gewichtsverhältnis 5 : 1 und ganz besonders bevorzugt im Gewichtsverhältnis 8 : 1.

Bei einer weiteren Ausführungsform umfasst die erfindungsgemäß einsetzbare Drucktinte, vorzugsweise 3D-Drucktinte, wenigstens eine difunktionale strahlungshärtbare Komponente und wenigstens eine tetrafunktionale strahlungshärtbare Komponente im Gewichtsverhältnis 5 : 1, besonders bevorzugt im Gewichtsverhältnis 10 : 1 und ganz besonders bevorzugt im Gewichtsverhältnis 20 : 1.

Bei einer weiteren Ausführungsform umfasst die erfindungsgemäß einsetzbare Drucktinte, vorzugsweise 3D-Drucktinte, wenigstens eine monofunktionale strahlungshärtbare Komponente und wenigstens eine difunktionale strahlungshärtbare Komponente und wenigstens eine trifunktionale strahlungshärtbare Komponente im Gewichtsverhältnis 1 : 5 : 1, besonders bevorzugt im Gewichtsverhältnis 2 : 13 : 0,5 und ganz besonders bevorzugt im Gewichtsverhältnis 2: 18 : 0,3.

Bei einer besonders bevorzugten Ausführungsform umfasst die erfindungsgemäß einsetzbare Drucktinte, vorzugsweise 3D-Drucktinte, als strahlungshärtbare Komponente wenigstens eine Art an difunktionalem (Meth)acrylatmonomer und wenigstens eine Art an trifunktionalem (Meth)acrylatmonomer, wobei die Viskosität der erfindungsgemäß einsetzbaren Drucktinte, vorzugsweise 3D-Drucktinte bei ≤ 50 mPa·s, bevorzugt in einem Bereich von 5 mPa·s bis 33 mPa·s, weiter bevorzugt in einem Bereich von 7 mPa·s bis 27 mPa·s, besonders bevorzugt in einem Bereich von 9 mPa·s bis 23 mPa·s und ganz besonders bevorzugt in einem Bereich von 11 mPa·s bis 21 mPa·s liegt.

Bei einer weiteren bevorzugten Ausführungsform umfasst die erfindungsgemäß einsetzbare Drucktinte, vorzugsweise 3D-Drucktinte, als strahlungshärtbare Komponente wenigstens eine Art an difunktionalem Epoxymonomer und wenigstens eine Art an trifunktionalem Epoxymonomer, wobei die Viskosität der erfindungsgemäß einsetzbaren Drucktinte, vorzugsweise 3D-Drucktinte bei ≤ 53 mPa·s, bevorzugt in einem Bereich von 4 mPa·s bis 31 mPa·s, weiter bevorzugt in einem Bereich von 6 mPa-s bis 28 mPa-s, besonders bevorzugt in einem Bereich von 9 mPa-s bis 22 mPa-s und ganz besonders bevorzugt in einem Bereich von 10 mPa·s bis 20 mPa·s liegt.

Bei einer Ausführungsform umfasst die erfindungsgemäß einsetzbaren Drucktinte, vorzugsweise 3D-Drucktinte, wenigstens einen UV-Initiator. Die erfindungsgemäß einsetzbare Drucktinte, vorzugsweise 3D-Drucktinte, kann beispielsweise Benzophenon (CAS Nr. 119-61-9), 2-Methylbenzophenon (CAS Nr. 131-58-8), 4-Methylbenzophenon (CAS Nr. 134-84-9), 4,4`-Bis(dimethylamino)benzophenon (CAS Nr. 90-94-8), Benzoin (CAS Nr. 119-53-9), Benzoinmethylether (CAS Nr. 3524-62-7), Benzoinisopropylether (CAS Nr. 6652-28-4), 2,2-Dimethoxy-1,2-diphenylethan-1-on (CAS Nr. 24650-42-8), Phenylbis(2,4,6-trimethylbenzoyl)phosphinoxid (CAS Nr. 162881-26-7), 2,4,6-Trimethylbenzoylphenylphosphinsäureethylester (CAS Nr. 84434-11-7), 2-Methyl-1-[4-(methylthio)phenyl]-2-(4-morphofinyl)-1-propanon (CAS Nr. 71868-10-5), 2-Hydroxy-2-methyl-1-phenyl-1-propanon (CAS Nr. 7473-98-5), 2-(Dimethylamino)-1-(4-(4-morpholinyl)phenyl)-2-(phenyhnethyl)-1-butanon (CAS Nr. 119313-12-1), Diphenyl(2,4,6-trimethylbenzoyl)phosphinoxid (CAS Nr. 75980-60-8), Triarylsulfoniumhexafluorophosphat-Salze (CAS Nr. 109037-77-6), Triarylsulfoniumhexafluoroantimonat-Salze (CAS Nr. 109037-75-4) oder Mischungen hiervon als UV-Initiator umfassen. Bevorzugt umfasst die erfindungsgemäß einsetzbare Drucktinte, vorzugsweise 3D-Drucktinte, Benzophenon, 2,2-Dimethoxy-1,2-diphenylethan-1-on, Phenylbis(2,4,6-trimethylbenzoyl)phosphinoxid, Diphenyl(2,4,6-trimethylbenzoyl)phosphinoxid, Triarylsulfoniumhexafluorophosphat-Salze oder Mischungen hiervon, besonders bevorzugt 2,2-Dimethoxy-1,2-diphenylethan-1-on, Phenylbis(2,4,6-trimethylbenzoyl)phosphinoxid, Diphenyl(2,4,6-trimethylbenzoyl)phosphinoxid oder Mischungen hiervon als UV-Initiator.

Die erfindungsgemäß einsetzbare Drucktinte, vorzugsweise 3D-Drucktinte, umfasst den wenigstens einen UV-Initiator in einem Gesamtanteil aus einem Bereich von bevorzugt 0,01 Gew.-% bis 3,7 Gew.-%, besonders bevorzugt aus einem Bereich von 0,1 Gew.-% bis 2,1 Gew.-% und ganz besonders bevorzugt aus einem Bereich von 0,3 Gew.-% bis 1,7 Gew.-%, jeweils bezogen auf das Gesamtgewicht der Drucktinte, vorzugsweise 3D-Drucktinte.

Bei einer Ausführungsform kann der wenigstens eine UV-Initiator zusammen mit einem Co-Initiator eingesetzt werden. Co-Initiatoren werden vorzugsweise immer dann zugesetzt, wenn der UV-Initiator ein zweites Molekül zur Bildung eines im UV-Bereich aktiven Radikals benötigt. Beispielsweise benötigt Benzophenon ein zweites Molekül, wie beispielsweise ein Amin, z.B. Triethylamin, Methyldiethanolamin oder Triethanolamin, um nach Absorption von UV-Licht ein Radikal zu erzeugen.

Das optional wenigstens eine Lösungsmittel der erfindungsgemäß einsetzbare Drucktinte, vorzugsweise 3D-Druckttinte, kann aus der Gruppe bestehend aus Alkoholen, Ketonen, Estern, Ethern, Thioethern, Amiden, Kohlenwasserstoffen, Aminen und Mischungen hiervon, ausgewählt werden. Vorzugsweise wird das optional wenigstens eine Lösungsmittel aus der Gruppe, bestehend aus Alkoholen, Ketonen, Estern und Mischungen hiervon, ausgewählt. Ein Lösungsmittel kann im Sinne dieser Erfindung einerseits eine Art von Lösungsmittel, andererseits ein Lösungsmittelgemisch sein.

Beispiele für als Lösungsmittel einsetzbare Alkohole sind Methanol, Ethanol, Propanol, Isopropanol, Butanol, Pentanol, Hexanol oder Mischungen hiervon.

Beispiele für als Ketone einsetzbare Lösungsmittel sind Aceton, Methylethylketon, Cyclohexanon, Diisobutylketon, Methylpropylketon, Diacetonalkohol oder Mischungen hiervon.

Beispiele für Ester als einsetzbare Lösungsmittel sind Methylacetat, Ethylacetat, 1-Methoxy-2-propylacetat, n-Propylacetat, i-Propylacetat, Ethoxypropylacetat, Butylacetat, Methylpropionat, Ethylpropionat, Glykoletheracetate, Butylglykolacetat, Propylenglykoldiacetat, Ethyllactat oder Mischungen hiervon.

Beispiele für Ether als einsetzbare Lösungsmittel sind Diethylether, Dipropylether, Tetrahydrofuran, Ethylenglykolethylether, Ethylenglycolmethylether, Triethylenglykolbutylether, Tetraethylenglykolmethylether, Tetraethylenglykolbutylether, Dipropylenglykoldimethylether, Propylenglykolbutylether, 1-Methoxy-2-propanol, 3-Methoxy-3-methyl-1-butanol oder Mischungen hiervon.

Beispiele für Amide als einsetzbare Lösungsmittel sind Dimethylacetamid, Dimethylformamid, Formamid, N-Methylformamid, N-Methylpyrrolidon und 2-Pyrrolidon.

Beispiele für Kohlenwasserstoffe als einsetzbare Lösungsmittel sind Terpene, wie Pinen, Limonen oder Terpinolen, aliphatische Kohlenwasserstoffe, wie Hexan, Heptan, Octan oder Testbenzin, aromatische Kohlenwasserstoffe, wie Toluol oder Xylol.

Bei einer Ausführungsform wird das optional wenigstens eine Lösungsmittel der erfindungsgemäß einsetzbaren Drucktinte, insbesondere 3D-Drucktinte, aus der Gruppe, bestehend aus Isopropanol, Ethanol, Butanol, Diisobutylketon, Butylglykol, Butylglykolacetat, Propylenglykoldiacetat, Dipropylenglykoldimethylether, Ethyllactat, Ethoxypropylacetat und Mischungen hiervon, ausgewählt.

Bei einer Ausführungsform weist das optional wenigstens eine Lösungsmittel einen Flammpunkt von mindestens 61°C auf.

Bei einer bevorzugten Ausführungsform liegt der Anteil des optional vorhandenen, wenigstens einen Lösungsmittel in der erfindungsgemäß einsetzbaren Drucktinte, vorzugsweise 3D-Drucktinte, in einem Bereich von 0 Gew.-% bis 10 Gew.-%, bevorzugt in einem Bereich von 0 Gew.-% bis 7,7 Gew.-%, besonders bevorzugt in einem Bereich von 0,1 Gew.-% bis 6,3 Gew.-% und ganz besonders bevorzugt in einem Bereich von 0,1 Gew.-% bis 5,2 Gew.-%, jeweils bezogen auf das Gesamtgewicht der Drucktinte, vorzugsweise 3D-Drucktinte. Bei einer besonders bevorzugten Ausführungsform umfasst die erfindungsgemäß einsetzbare Drucktinte, vorzugsweise 3D-Drucktinte, kein Lösungsmittel.

Die Drucktinte, vorzugsweise 3D-Drucktinte, weist bevorzugt eine Oberflächenspannung aus einem Bereich von 10 mN/m bis 80 mN/m, besonders bevorzugt aus einem Bereich von 15 mN/m bis 40 mN/m und ganz bevorzugt aus einem Bereich von 18 mN/m bis 35 mN/m auf. Liegt die Oberflächenspannung unter 10 mN/m, werden die Tropfen am Druckkopf zu groß für die gewünschte Anwendung. Liegt die Oberflächenspannung über 80 mN/m, bilden sich keine definierten Tropfen der Drucktinte am Druckkopf. Die Oberflächenspannung wird vorzugsweise bei einer Temperatur von 25°C mit dem Gerät DSA 100 der Firma Krüss und der Pendant-Drop-Methode bestimmt.

Die Viskosität der Drucktinte, vorzugsweise 3D-Drucktinte, liegt bevorzugt in einem Bereich von 4 mPa·s bis 56 mPa·s, weiter bevorzugt in einem Bereich von 7 mPa·s bis 45 mPa·s, besonders bevorzugt in einem Bereich von 9 mPa·s bis 34 mPa·s, und ganz besonders bevorzugt in einem Bereich von 10 mPa·s bis 22 mPa·s. Die Viskosität wird vorzugsweise mit einem Rheometer C-VOR 150 der Fa. Malvern mit der Vorgabe einer Winkelgeschwindigkeit von 5,2 rad/sec bei 25°C gemessen.

Die erfindungsgemäß einsetzbare Drucktinte, vorzugsweise 3D-Drucktinte, kann wenigstens ein Farbmittel umfassen. Als Farbmittel können im umgebenden Medium lösliche oder dispergierbare, bunte oder unbunte Farbstoffe zum Einsatz kommen. In Abhängigkeit vom zu erzielenden Effekt und/oder von dem zu erzielenden optischen Eindruck können als Farbmittel alternativ oder zusätzlich zu den Farbstoffen auch im umgebenden Medium unlösliche Pigmente eingesetzt werden. Als Pigmente werden vorzugsweise Effektpigmente, wie Metalleffektpigmente oder Perlglanzpigmente, organische und/oder anorganische Pigmente, verwendet.

Die in der erfindungsgemäß einsetzbare Drucktinte, vorzugsweise 3D-Drucktinte, einsetzbaren Metalleffektpigmente können entweder durch konventionelle Nass- oder Trockenvermahlung oder durch PVD-Verfahren hergestellt werden. Geeignete metallische, gegebenenfalls zu beschichtende, plättchenförmige Substrate können aus der Gruppe, bestehend aus Aluminium-, Kupfer-, Zink-, Eisen-, Titan-, Edelstahl-, Gold-, Silberplättchen, deren Legierungen und deren Gemische ausgewählt werden. Bevorzugt werden die metallischen plättchenförmigen Substrate aus der Gruppe, bestehend aus Aluminium-, Kupfer-, Zink-, Eisen-, Edelstahlplättchen, deren Legierungen und deren Gemische ausgewählt. Besonders bevorzugt werden die metallischen plättchenförmigen Substrate aus der Gruppe, bestehend aus Aluminium-, Kupfer-, Zink-, Eisenplättchen, deren Legierungen und deren Gemische ausgewählt. Ganz besonders bevorzugt werden die metallischen Substrate aus der Gruppe, bestehend aus Aluminium-, Kupfer-, Eisenplättchen, deren Legierungen und deren Gemische ausgewählt. Insbesondere bevorzugt werden als metallische plättchenförmige Substrate Aluminiumplättchen, Kupferplättchen, deren Legierungen oder deren Gemische eingesetzt.

Sind die metallischen plättchenförmigen Substrate mit wenigstens einer Nachbeschichtung versehen, kann diese beispielsweise aus Metalloxiden und/oder Metallhydroxiden von Titan, Aluminium, Eisen, Cer, Chrom, Silizium und/oder Mischungen hiervon ausgewählt sein. Mit Metalloxiden beschichtete Metalleffektpigmente werden beispielsweise in EP 1 532 213 A2 sowie in EP 1 758 550 A2 beschrieben. Dieses Farbspektrum lässt sich durch eingefärbte Metalleffektpigmente erweitern. Werden Aluminiumplättchen nasschemisch oxidiert, wie beispielsweise aus EP 0 848 735 A1 bekannt, können warme Champagnerfarbtöne erzielt werden. Die weitere Beschichtung nasschemisch oxidierter Aluminiumplättchen mit beispielsweise Eisenoxiden ermöglicht gemäß EP 1 685 198 A2 intensive Rotfarbtöne. Sind die Aluminiumeffektpigmente mit einer Farbpigmente enthaltenden Metalloxidschicht versehen, beeinflussen die Farbpigmente das Erscheinungsbild des resultierenden Aluminiumeffektpigments. Rot- bzw. Blaufarbtöne können beispielsweise durch die Verwendung von D & C Red 7 (CI 15 850), D & C Red 34 (CI 15 880), Carmine (CI 75 470) bzw. Berliner Blau (CI 77 400) als Farbpigment erreicht werden.

Alternativ bzw. zusätzlich zu den vorstehend aufgeführten Metalleffektpigmenten können der erfindungsgemäß einsetzbare Drucktinte, vorzugsweie 3D-Drucktinte, Perlglanzpigmente basierend auf nichtmetallischen plättchenförmigen Substraten zugesetzt werden.

Die nichtmetallischen, gegebenenfalls zu beschichtenden, plättchenförmigen Substrate sind vorzugsweise im Wesentlichen transparent, bevorzugt transparent, d.h. für sichtbares Licht sind sie zumindest teilweise durchlässig. Die nichtmetallischen plättchenförmigen Substrate können aus der Gruppe, bestehend aus natürlichen Glimmerplättchen, synthetischen Glimmerplättchen, Glasplättchen, SiO₂-Plättchen, Al₂O₃-Plättchen, BiOCI-Plättchen, TiO₂-Plättchen, Fe₂O₃-Plättchen, Sericitplättchen, Kaolinplättchen, Talkumplättchen, Polymerplättchen, ausgewählt werden. Des Weiteren können als nichtmetallische plättchenförmige Substrate Glasplättchen, die beidseitig mit semitransparenten Metallschichten, ausgewählt aus der Gruppe, bestehend aus Silber, Aluminium, Chrom, Nickel, Gold, Platin, Palladium, Kupfer, Zink, Titan, deren Legierungen und Mischungen hiervon, beschichtet sind, verwendet werden. Bevorzugt werden die nichtmetallischen plättchenförmigen Substrate aus der Gruppe, bestehend aus natürlichen Glimmerplättchen, synthetischen Glimmerplättchen, Glasplättchen, SiO₂-Plättchen, Al₂O₃-Plättchen und deren Gemische ausgewählt. Besonders bevorzugt werden die nichtmetallischen plättchenförmigen Substrate aus der Gruppe, bestehend aus natürlichen Glimmerplättchen, synthetischen Glimmerplättchen, Glasplättchen und deren Gemische ausgewählt. Ganz besonders bevorzugt sind als Substrate synthetische Glimmerplättchen und Glasplättchen und deren Gemische. Insbesondere sind als Substrat Glasplättchen bevorzugt.

Als Glasplättchen werden bevorzugt jene verwendet, die nach den in EP 0 289 240 A1, WO 2004/056716 A1 und der WO 2005/063637 A1 beschriebenen Verfahren hergestellt werden. Bevorzugt weisen die Glasplättchen eine Zusammensetzung entsprechend der Lehre, insbesondere entsprechend dem Hauptanspruch, der EP 1 980 594 B1, besonders bevorzugt entsprechend der Lehre, insbesondere entsprechend dem jeweiligen Hauptanspruch, der EP 1 829 833 B1 oder der EP 2 042 474 B1, auf. Das nichtmetallische plättchenförmige Substrat, wie vorstehend beschrieben, kann mit wenigstens einer Schicht oder Beschichtung versehen werden, wobei die wenigstens eine Schicht vorzugsweise Metalloxide, Metalloxidhydrate, Metallhydroxide, Metallsuboxide, Metalle, Metallfluoride, Metalloxyhalogenide, Metallchalcogenide, Metallnitride, Metalloxynitride, Metallsulfide, Metallcarbide oder Mischungen davon umfasst. Bevorzugt werden als Schicht oder Beschichtung Metalloxide, Metalloxidhydrate, Metallhydroxide und/oder deren Mischungen eingesetzt. Besonders bevorzugt werden Metalloxide und Metalloxidhydrate und/oder deren Mischungen eingesetzt. Vorstehend genannte Materialien können entweder als separat voneinander getrennte Schichten oder auch nebeneinander in derselben Schicht vorliegen. Die Beschichtung kann entweder das Substrat vollständig umhüllen, nur partiell auf dem Substrat vorliegen oder nur dessen obere und/oder untere Fläche bedecken. Wird eine hochbrechende Schicht auf ein nichtmetallisches plättchenförmiges Substrat aufgebracht, so liegt der Brechungsindex bei n ≥ 1,8, bevorzugt bei n ≥ 1,9 und besonders bevorzugt bei n ≥ 2,0. Im Falle einer niedrigbrechenden Schicht oder Beschichtung liegt der Brechungsindex bei n < 1,8, bevorzugt bei n < 1,7 und besonders bevorzugt bei n < 1,6. Als hochbrechende Schicht eignen sich beispielsweise Metalloxide wie Titanoxid, vorzugsweise Titandioxid (TiO₂), Eisenoxid, vorzugsweise Eisen(III)oxid (Fe₂O₃) und/oder Eisen(II/III)oxid (Fe₃O₄), Zinkoxid, vorzugsweise ZnO, Zinnoxid, vorzugsweise Zinndioxid (SnO₂), Zirkoniumoxid, vorzugsweise Zirkoniumdioxid (ZrO₂), Antimonoxid, vorzugsweise Antimon(III)oxid (Sb₂O₃), Magnesiumoxid, vorzugsweise MgO, Ceroxid, vorzugsweise Cer(IV)oxid (CeO₂), Cobaltoxid, vorzugsweise Cobalt(II)oxid (CoO) und/oder Cobalt(II/III)oxid (Co₃O₄), Chromoxid, vorzugsweise Chrom(III)oxid (Cr₂O₃), Kupferoxid, vorzugsweise Kupfer(I)oxid (Cu₂O) und/oder Kupfer(II)oxid (CuO), Vanadiumoxid, vorzugsweise Vanadium(IV)oxid (VO₂) und/oder Vanadium(III)oxid (V₂O₃), Metallsulfide wie Zinksulfid, vorzugsweise Zink(II)sulfid (ZnS), Metalloxidhydrate wie Goethit (FeOOH), Titanate wie Calciumtitanat (CaTiO₃) oder Eisentitanate, wie z.B. Ilmenit (FeTiO₃), Pseudobrookit (Fe₂TiO₅) und/oder Pseudorutil (Fe₂Ti₃O₉), Metalle, wie z.B. Molybdän, Eisen, Wolfram, Chrom, Cobalt, Nickel, Silber, Palladium, Platin, deren Gemische und/oder Legierungen, dotierte Metalloxide, wie beispielsweise Titandioxid und Zirkoniumdioxid, die mit selektiv absorbierenden Farbmitteln eingefärbt sind, und/oder deren Gemische. Die zuletzt genannte Einfärbung nicht absorbierender hochbrechender Metalloxide kann z.B. durch Einbau von Farbmitteln in die Metalloxidschicht, durch deren Dotierung mit selektiv absorbierenden Metallkationen oder farbigen Metalloxiden wie Eisen(III)oxid oder durch Überziehen der Metalloxidschicht mit einem ein Farbmittel enthaltenden Film erfolgen.

Beispiele für niedrigbrechende Schichten sind unter anderem Metalloxide wie Siliziumoxid, vorzugsweise Siliziumdioxid (SiO₂), Aluminiumoxid, vorzugsweise AI₂O₃, Boroxid, vorzugsweise Bor(III)oxid (B₂O₃), Metallfluoride wie Magnesiumfluorid, vorzugsweise MgF₂, Aluminiumfluorid, vorzugsweise AIF₃, Cerfluorid, vorzugsweise Cer(III)fluorid (CeF₃), Calciumfluorid, vorzugsweise CaF₂, Metalloxidhydrate wie Aluminiumoxidhydrat AIOOH, Siliziumoxidhydrat, vorzugsweise SiO₂ · H₂O und/ oder deren Gemische. Vorzugsweise umfasst die niedrigbrechende Schicht wenigstens ein Metalloxid, Metallhydroxid und/oder Metalloxidhydrat von Silizium.

Ist das nichtmetallische plättchenförmige Substrat mit nur einer einzigen Metalloxidschicht beschichtet, so weist diese vorzugsweise einen hohen Brechungsindex auf. In Abhängigkeit von der Metalloxidschichtdicke können derartige Perlglanzpigmente unterschiedliche Farbeffekte bewirken, wie in Tabelle 1 veranschaulicht.

**Tabelle 1: Beispiele typischer Farben und Schichtdicken von Perlglanzpigmenten**

| | Belegung/ Schichtdicke | Farbe |
|---|---|---|
| Silberweiße Perlglanzpigmente | TiO₂: 40 bis 60 nm | silber |
| Interferenzpigmente | TiO₂: 20 bis 40 nm | fahlblau |
| | TiO₂: 60 bis 80 nm | gelb |
| | TiO₂: 80 bis 100 nm | rot |
| | TiO₂: 100 bis 140 nm | blau |
| | TiO₂: 120 bis 160nm | grün |
| | TiO₂: 280 - 320 nm | grün (III. Ordnung) |
| Farbglanzpigmente | Fe₂O₃: 35 - 45 nm | bronze |
| | Fe₂O₃: 45 - 55 nm | kupfer |
| | Fe₂O₃: 55 - 65 nm | rot |
| | Fe₂O₃: 65 - 75 nm | rotviolett |
| | Fe₂O₃: 75 - 85 nm | rotgrün |
| | Fe₃O₄ | schwarz |
| Kombinationspigmente | TiO₂/ Fe₂O₃ | Goldtöne |

Die nichtmetallischen plättchenförmigen Substrate können auch mit einem mehrlagigen Schichtaufbau mit oder bestehend aus Metalloxid, Metallhydroxid, Metallsuboxid und/oder Metalloxidhydrat beschichtet sein, wobei die Reihenfolge der Schichten variabel sein kann. Bevorzugt ist hierbei eine Schichtenfolge, bei der wenigstens eine hochbrechende Schicht und wenigstens eine niedrigbrechende Schicht in alternierender Weise auf einem nichtmetallischen plättchenförmigen Substrat angeordnet sind. Bei der alternierenden Anordnung ist es auch möglich, ein oder mehrere hochbrechende Schichten unmittelbar übereinander und nachfolgend ein oder mehrere niedrigbrechende Schichten unmittelbar übereinander anzuordnen. Wesentlich ist jedoch, dass in dem Schichtaufbau hoch- und niedrigbrechende Schichten vorkommen. Vorzugsweise sind aufgehend vom plättchenförmigen Substrat wenigstens eine hoch-, niedrig- und wiederum hochbrechende Schicht angeordnet, was in Perlglanzpigmenten mit besonders intensiven Interferenzfarben resultiert.

Bevorzugt werden als Farbstoffe, organische oder anorganische Pigmente, diejenigen in der erfindungsgemäß einsetzbaren Drucktinte, vorzugsweise 3D-Drucktinte, eingesetzt, welche auch in Textilien und/oder Lebensmitteln zugelassen sind.

Geeignete organische Pigmente für den Einsatz in der erfindungsgemäß einsetzbaren Drucktinte, vorzugsweise 3D-Drucktinte, umfassen beispielsweise Nitroso-, Nitro-, Azo-, Xanthen-, Chinolin-, Anthrachinon-, Phthalocyanin-, Metallkomplex-, Isoindolinon-, Isoindolin-, Chinacridon-, Perinon-, Perylen-, Diketopyrrolopyrrol-, Thioindigo-, Dioxazin-, Triphenylmethan- und Chinophthalonverbindungen.

Die in der erfindungsgemäß einsetzbaren Drucktinte, vorzugsweise 3D-Drucktinte, einsetzbaren Farbstoffe oder organischen Pigmente können beispielsweise C.I. Disperse Yellow 5, C.I. Disperse Yellow 13, C.I. Disperse Yellow 33, C.I. Disperse Yellow 42, C.I. Disperse Yellow 51, C.I. Disperse Yellow 54, C.I. Disperse Yellow 64, C.I. Disperse Yellow 71, C.I. Disperse Yellow 86, C.I. Disperse Yellow 114, C.I. Disperse Yellow 201, C.I. Disperse Yellow 211, C.I. Disperse Orange 30, C.I. Disperse Orange 73, C.I. Disperse Red 4, C.I. Disperse Red 11, C.I. Disperse Red 15, C.I. Disperse Red 55, C.I. Disperse Red 58, C.I. Disperse Red 60, C.I. Disperse Red 73, C.I. Disperse Red 86, C.I. Disperse Red 91, C.I. Disperse Red 92, C.I. Disperse Red 127, C.I. Disperse Red 152, C.I. Disperse Red 189, C.I. Disperse Red 229, C.I. Disperse Red 279, C.I. Disperse Red 302, C.I. Disperse Red 302:1, C.I. Disperse Red 323, C.I. Disperse Blue 27, C.I. Disperse Blue 54, C.I. Disperse Blue 56, C.I. Disperse Blue 73, C.I. Disperse Blue 280, C.I. Disperse Violet 26, C.I. Disperse Violet 33, C.I. Solvent Yellow 179, C.I. Solvent Violet 36, C.I. Pigment Blue 15, C.I. Pigment Blue 80, C.I. Pigment Green 7, C.I. Pigment Orange 36, C.I. Pigment Orange 36, C.I. Pigment Yellow 13, C.I. Pigment Violet 23, C.I. Pigment Violet 37, C.I. Pigment Black 1, C.I. Pigment Black 6, C.I. Pigment Black 7 oder Mischungen davon umfassen.

Bevorzugt werden die in der erfindungsgemäß einsetzbaren Drucktinte, vorzugsweise 3D-Drucktinte, C.I. Disperse Yellow 42, C.I. Disperse Yellow 201, C.I. Solvent Yellow 179, C.I. Disperse Orange 73, C.I. Disperse Red 279, C.I. Disperse Red 302:1, C.I. Disperse Blue 56, C.I. Solvent Violet 36 oder Mischungen davon als Farbstoffe oder organische Pigmente eingesetzt.

Geeignete anorganische Pigmente umfassen beispielsweise Metalloxide und/oder andere in Wasser schwerlösliche oder unlösliche Metallverbindungen, insbesondere Metalloxide von Titan, beispielsweise Titandioxid (C.I. Pigment White 6), Zink, Eisen, beispielsweise rotes und schwarzes Eisenoxid (C.I. Pigment Red 101 (rot), C.I. Pigment Black 11 (schwarz)), Zirkonium, Silizium, Mangan, Aluminium, Cer, Chrom sowie Mischoxide der genannten Metalle und deren Mischungen. Weitere geeignete anorganische Pigmente sind beispielsweise Bariumsulfat-, Zinksulfid-, Manganviolett-, Ultramarinblau- und/ oder Berliner Blau-Pigmente.

Die organischen und anorganischen Farbpigmente werden in der Regel in einer Perlmühle oder Mahlkörpermühle, z.B. mit Zirkonoxidkugeln, angerieben. Die Anreibung kann in organischem Lösemittel, beispielsweise in Isopropanol, erfolgen.

Bei der Verwendung von Effektpigmenten in der erfindungsgemäß einsetzbaren Drucktinte, vorzugsweise 3D-Drucktinte, ist es bevorzugt, dass die Teilchengröße D₉₀ bei ≤ 14 µm, bevorzugt in einem Bereich von 1,7 µm bis 12,7 µm, weiter bevorzugt in einem Bereich von 1,9 µm bis 11,5 µm, besonders bevorzugt in einem Bereich von 2,3 µm bis 9,8 µm und ganz besonders bevorzugt in einem Bereich von 2,6 µm bis 9,1 µm liegt. Die Teilchengröße D₉₀ ist ein Maß für den Grobanteil. Je kleiner der D₉₀-Wert ist, desto besser sind effektpigmenthaltige Drucktinten, vorzugsweise 3D-Drucktinten, in verschiedenen Druckköpfen verdruckbar.

Bei einer weiteren Ausführungsform weisen die in einer erfindungsgemäß einsetzbaren Drucktinte, vorzugsweise 3D-Drucktinte, einsetzbaren Effektpigmente eine Teilchengröße D₉₅ aus einem Bereich von 3 µm bis 17 µm, bevorzugt aus einem Bereich von 3,3 µm bis 15,3 µm, besonders bevorzugt aus einem Bereich von 3,6 µm bis 12,9 µm und ganz besonders bevorzugt aus einem Bereich von 3,9 µm bis 11,6 µm auf.

Bei einer weiteren Ausführungsform weisen die in einer erfindungsgemäß einsetzbaren Drucktinte, vorzugsweise 3D-Drucktinte, einsetzbaren Effektpigmente eine Teilchengröße D₉₈ aus einem Bereich von 4 µm bis 21 µm, bevorzugt aus einem Bereich von 4,2 µm bis 19,6 µm, besonders bevorzugt aus einem Bereich von 4,8 µm bis 17,9 µm und ganz besonders bevorzugt aus einem Bereich von 5,2 µm bis 16,3 µm auf.

Bei einer weiteren Ausführungsform weisen die in einer erfindungsgemäß einsetzbaren Drucktinte, vorzugsweise 3D-Drucktinte, einsetzbaren organischen oder anorganischen Pigmente eine maximale Teilchengröße aus einem Bereich von 0,05 µm bis 3,0 µm, bevorzugt aus einem Bereich von 0,06 µm bis 2,5 µm und besonders bevorzugt in einem Bereich von 0,07 µm bis 1,7 µm.

Der D₉₀-, D₉₅- bzw. D₉₈-Wert der Summenhäufigkeitsverteilung der volumengemittelten Größenverteilungsfunktion, wie sie durch Laserbeugungsmethoden erhalten wird, gibt an, dass 90%, 95% bzw. 98% der Pigmente einen Durchmesser aufweisen, der gleich oder kleiner als der jeweils angegebene Wert ist. Hierbei wird die Größenverteilungskurve der Perlglanzpigmente mit einem Gerät der Fa. Malvern (Gerät: MALVERN Mastersizer 2000), die Größenverteilungskurve der Metalleffektpigmente (in Pulverform) mit einem Gerät der Fa. Sympathec (Gerät: HELOS Partikelgrößenanalyse mit RODOS Trockendispergierung und Dosieraggregat VIBRI) und die Größenverteilungskurve der Metalleffektpigmente (in Pastenform), der organischen und anorganischen Pigmente mit einem Gerät der Fa. Quantachrome (Gerät: Cilas 1064), jeweils gemäß Herstellerangaben bestimmt. Die Auswertung der Streulichtsignale erfolgte dabei nach der Fraunhofer-Methode bzw. Mie-Theorie, welche auch Brechungs- und Absorptionsverhalten der Pigmente beinhaltet.

Der Gesamtanteil an Farbmittel liegt in der erfindungsgemäß einsetzbaren Drucktinte, vorzugsweise 3D-Drucktinte, bevorzugt in einem Bereich von 0,0 Gew.-% bis 66,0 Gew.-%, weiter bevorzugt in einem Bereich von 0,01 Gew.-% bis 53,1 Gew.-%, besonders bevorzugt in einem Bereich von 0,1 Gew.-% bis 42,3 Gew.-% und ganz besonders bevorzugt in einem Bereich von 0,11 Gew.-% bis 27,7 Gew.-%, jeweils bezogen auf das Gesamtgewicht der Drucktinte, vorzugsweise 3D-Drucktinte. Der Gesamtanteil an Farbmittel umfasst den Anteil aller in der Drucktinte, vorzugsweise 3D-Drucktinte, vorliegenden Farbmittel, unabhängig davon, ob es sich um Farbstoffe, Pigmente, Mischungen davon, Mischungen unterschiedlicher Farbstoffe, Mischungen unterschiedlicher Pigmente etc. handelt.

Der Gesamtanteil an Farbstoff und/oder organischem Pigment liegt in der erfindungsgemäß einsetzbaren Drucktinte, vorzugsweise 3D-Drucktinte, bevorzugt in einem Bereich von 0,0 Gew.-% bis 66,0 Gew.-%, weiter bevorzugt in einem Bereich von 0,01 Gew.-% bis 59,3 Gew.-%, besonders bevorzugt in einem Bereich von 0,1 Gew.-% bis 46,8 Gew.-% und ganz besonders bevorzugt in einem Bereich von 0,2 Gew.-% bis 33,3 Gew.-%, jeweils bezogen auf das Gesamtgewicht der Drucktinte, vorzugsweise 3D-Drucktinte. Vorstehend aufgeführte Bereiche beziehen sich auf den Anteil wenigstens einer Art an Farbstoff, wenigstens einer Art an organischem Pigment, einer Mischung hiervon, einer Mischung aus voneinander verschiedenen Arten an Farbstoff oder einer Mischung aus voneinander verschiedenen Arten an organischem Pigment. Vorzugsweise umfasst die erfindungsgemäß einsetzbaren Drucktinte, vorzugsweise 3D-Drucktinte, eine Mischung auf Farbstoff und organischem Pigment im Verhältnis 7:1, bevorzugt 6:1, besonders bevorzugt 5:1 und ganz besonders bevorzugt 4:1.

Der Gesamtanteil an anorganischem Pigment liegt in der erfindungsgemäß einsetzbaren Drucktinte, vorzugsweise 3D-Drucktinte, bevorzugt in einem Bereich von 0,0 Gew.-% bis 44,2 Gew.-%, weiter bevorzugt in einem Bereich von 0,01 Gew.-% bis 21,3 Gew.-%, besonders bevorzugt in einem Bereich von 0,02 Gew.-% bis 14,6 Gew.-% und ganz besonders bevorzugt in einem Bereich von 0,03 Gew.-% bis 2,1 Gew.-%, jeweils bezogen auf das Gesamtgewicht der Drucktinte, vorzugsweise 3D-Drucktinte. Die Bereiche gelten sowohl für den Einsatz einer Art an anorganischem Pigment als auch für eine Mischung von voneinander verschiedenen anorganischen Pigmenten.

Der Gesamtanteil an Metalleffektpigment liegt in der erfindungsgemäß einsetzbaren Drucktinte, vorzugsweise 3D-Drucktinte, bevorzugt in einem Bereich von 0,0 Gew.-% bis 21,3 Gew.-%, weiter bevorzugt in einem Bereich von 0,01 Gew.-% bis 14,4 Gew.-%, besonders bevorzugt in einem Bereich von 0,02 Gew.-% bis 9,2 Gew.-% und ganz besonders bevorzugt in einem Bereich von 0,03 Gew.-% bis 4,1 Gew.-%, jeweils bezogen auf das Gesamtgewicht der Drucktinte, vorzugsweise 3D-Drucktinte. Die vorstehend genannten Bereich gelten sowohl für den Einsatz einer Art an Metalleffektpigment als auch für den Einsatz einer Mischung aus voneinander verschiedenen Metalleffektpigmenten in einer Drucktinte, vorzugsweise 3D-Drucktinte.

Der Gesamtanteil an Perlglanzpigment liegt in der erfindungsgemäß einsetzbaren Drucktinte, vorzugsweise 3D-Drucktinte, bevorzugt in einem Bereich von 0,0 Gew.-% bis 42,3 Gew.-%, weiter bevorzugt in einem Bereich von 0,01 Gew.-% bis 33,3 Gew.-%, besonders bevorzugt in einem Bereich von 0,1 Gew.-% bis 23,1 Gew.-% und ganz besonders bevorzugt in einem Bereich von 0,1 Gew.-% bis 16,2 Gew.-%, jeweils bezogen auf das Gesamtgewicht der Drucktinte, vorzugsweise 3D-Drucktinte. Die vorstehend genannten Bereiche umfassen den Einsatz wenigstens einer Art an Perlglanzpigment sowie den Einsatz voneinander verschiedener Arten an Perlglanzpigment in der erfindungsgemäß einsetzbaren Drucktinte, vorzugsweise 3D-Drucktinte.

Der Gesamtanteil an Farbmittel liegt in dem erfindungsgemäßen Brillenglas in einem Bereich von 0,01 Gew.-% bis 8,0 Gew.-%, besonders bevorzugt in einem Bereich von 0,01 Gew.-% bis 4,0 Gew.-% und ganz besonders bevorzugt in einem Bereich von 0,05 Gew.-% bis 2,0 Gew.-%, jeweils bezogen auf das Gesamtgewicht des Brillenglases. Der Gesamtanteil an Farbmittel umfasst den Anteil aller Farbmittel im Brillenglas, unabhängig davon, ob es sich um Farbstoffe oder Pigmente, Mischungen unterschiedlicher Farbstoffe oder Mischungen unterschiedlicher Pigmente, Mischungen aus Farbstoffen und Pigmenten etc. handelt.

Der Gesamtanteil an Farbstoff und/oder organischem Pigment liegt in dem erfindungsgemäßen Brillenglas bevorzugt in einem Bereich von 0,0 Gew.-% bis 8,0 Gew.-%, weiter bevorzugt in einem Bereich von 0,0 Gew.-% bis 5,0 Gew.-%, besonders bevorzugt in einem Bereich von 0,02 Gew.-% bis 4,0 Gew.-% und ganz besonders bevorzugt in einem Bereich von 0,05 Gew.-% bis 3,0 Gew.-%, jeweils bezogen auf das Gesamtgewicht des Brillenglases. Vorstehend genannte Werte beziehen sich auf den Einsatz einer einzelnen Art an Farbstoff bzw. einer einzelnen Art an organischem Pigment, auf Farbstoffgemische bzw. Mischungen organischer Pigmente oder auf Mischungen wenigstens eines Farbstoffs und wenigstens eines organischen Pigments. Vorzugsweise wird eine Mischung aus verschiedenen Farbstoffen bzw. aus verschiedenen organischen Pigmenten eingesetzt.

Der Gesamtanteil an anorganischem Pigment liegt in dem erfindungsgemäßen Brillenglas bevorzugt in einem Bereich von 0,0 Gew.-% bis 8,0 Gew.-%, weiter bevorzugt in einem Bereich von 0,01 Gew.-% bis 6,0 Gew.-%, besonders bevorzugt in einem Bereich von 0,05 Gew.-% bis 5,0 Gew.-% und ganz besonders bevorzugt in einem Bereich von 0,1 Gew.-% bis 4,0 Gew.-%, jeweils bezogen auf das Gesamtgewicht des Brillenglases. Vorstehend genannte Bereiche gelten sowohl für eine Art an anorganischem Pigment als auch für Mischungen aus anorganischen Pigmenten.

Der Gesamtanteil an Metalleffektpigment liegt in dem erfindungsgemäßen Brillenglas bevorzugt in einem Bereich von 0,0 Gew.-% bis 4,0 Gew.-%, weiter bevorzugt in einem Bereich von 0,0 Gew.-% bis 2,0 Gew.-%, besonders bevorzugt in einem Bereich von 0,02 Gew.-% bis 1,5 Gew.-% und ganz besonders bevorzugt in einem Bereich von 0,08 Gew.-% bis 1,0 Gew.-%, jeweils bezogen auf das Gesamtgewicht des Brillenglases. Vorstehend genannte Bereiche beziehen sich sowohl auf eine Art an Metalleffektpigment als auch auf Mischungen aus unterschiedlichen Metalleffektpigmenten.

Der Gesamtanteil an Perlglanzpigment liegt in dem erfindungsgemäßen Brillenglas bevorzugt in einem Bereich von 0,0 Gew.-% bis 7,0 Gew.-%, weiter bevorzugt in einem Bereich von 0,1 Gew.-% bis 5,0 Gew.-%, besonders bevorzugt in einem Bereich von 0,1 Gew.-% bis 4,5 Gew.-% und ganz besonders bevorzugt in einem Bereich von 0,2 Gew.-% bis 3,5 Gew.-%, jeweils bezogen auf das Gesamtgewicht des Brillenglases. Vorstehend genannte Bereiche beziehen sich sowohl auf eine Art an Perlglanzpigment als auch auf Mischungen aus unterschiedlichen Perlglanzpigmenten.

Bei einer bevorzugten Ausführungsform der Erfindung umfasst ausschließlich die wenigstens eine farb- und/oder effektgebende Lage wenigstens ein Farbmittel. Vorzugsweise umfasst die farb- und/oder effektgebende Lage wenigstens eine Art eines organischen Farbstoffs und/oder wenigstens eine Art eines organischen Pigments oder eine Mischung aus voneinander verschiedenen organischen Farbstoffen, welche dem gedruckten Brillenglas die gewünschte Einfärbung verleihen soll(en).

Bei einer weiteren Ausführungsform der Erfindung umfasst die wenigstens eine farb- und/oder effektgebende Lage wenigstens eine Art eines organischen Farbstoff oder eine Mischung aus voneinander verschiedenen organischen Farbstoffen sowie wenigstens eine Art an Perlglanzpigment. Vorzugsweise umfasst das Brillenglas wenigstens eine Art an organischen Farbstoff oder eine Mischung aus voneinander verschiedenen organischen Farbstoffen in einem Gesamtanteil aus einem Bereich von 0,0 bis 8,0 Gew.-%, bevorzugt aus einem Bereich von 0,1 bis 6,0 Gew.%, ganz besonders bevorzugt aus einem Bereich von 0,2 bis 5,0 Gew.-% und wenigstens eine Art an Perlglanzpigment in einem Anteil aus einem Bereich von 0,0 bis 6,0 Gew.-%, bevorzugt aus einem Bereich von 0,2 bis 4,0 Gew.-% und ganz besonders bevorzugt aus einem Bereich von 0,5 bis 2,5 Gew.-%, jeweils bezogen auf das Gesamtgewicht des Brillenglases. Bevorzugt wird die Perlglanzpigment enthaltende Lage nur im Randbereich eines sich in einer Brillenfassung befindlichen Brillenglases gedruckt. Besonders bevorzugt befindet sich eine Perlglanzpigment umfassende Lage innerhalb eines Brillenglases in einem Abstand aus einem Bereich von 1,2 mm bis 18 mm, bevorzugt aus einem Bereich von 0,4 mm bis 14 mm, weiter bevorzugt aus einem Bereich von 0,06 mm bis 10 mm und ganz besonders bevorzugt aus einem Bereich von 0,01 mm bis 0,3 mm, jeweils zum Ferndurchblickpunkt bzw. Prismenmesspunkt bei Mehrstärken-/Gleitsichtgläsern.

Bei einer bevorzugten Ausführungsform der Erfindung befindet sich eine effektpigmenthaltige Lage in einem Brillenglas nicht im Bereich des Ferndurchblickpunktes bzw. Prismenmesspunktes bei Mehrstärken-/Gleitsichtgläsern. Sofern über die komplette eingefärbte Fläche eines Brillenglases wenigstens eine effektpigmenthaltige Lage vorhanden ist, befindet sich diese bevorzugt in einem Abstand aus einem Bereich von 1,2 mm bis 21,0 mm, bevorzugt aus einem Bereich von 0,4 mm bis 18,5 mm, weiter bevorzugt in einem Bereich von 0,06 bis 7,5 mm und ganz besonders bevorzugt in einem Bereich von 0,01 mm bis 0,1 mm, wobei der Abstand auf der Vorderfläche oder der Rückfläche des Brillenglases jeweils zum Ferndurchblickpunkt bzw. Prismenmesspunkt bei Mehrstärken-/Gleitsichtgläsern bestimmt wird. Vorzugsweise ist der Anteil an Effektpigmenten nahe des Ferndurchblickpunkts bzw. Prismenmesspunkts bei Mehrstärken-/Gleitsichtgläsern geringer als weiter entfernt von den vorstehend genannten Punkten. Ein im Inneren des Brillenglases gedrucktes Logo oder ein im Inneren eines Brillenglases gedruckter Schriftzug kann jedoch auch dann wenigstens eine effektpigmenthaltige Lage umfassen, wenn sich das Logo oder der Schriftzug innerhalb des vorstehend angegebenen Abstands zum Ferndurchblickpunkt bzw. Prismenmesspunkt bei Mehrstärken-/Gleitsichtgläsern befindet.

Die erfindungsgemäß einsetzbare Drucktinte, vorzugsweise 3D-Drucktinte, wird vorzugsweise durch Mischen aller Komponenten unter Rühren hergestellt, wobei das wenigstens eine Farbmittel, sofern vorhanden, vorgelegt und zunächst mit einer geringen Menge an strahlungshärtbarer Komponente und/oder Lösungsmitel gelöst oder dispergiert wird und anschließend die restlichen Komponenten zugefügt werden.

Die Herstellung eines Brillenglases mittels Druckverfahren, insbesondere mittels 3D-Druckverfahren, ermöglicht eine individuelle Einfärbung eines jeden Brillenglases. Die individuelle Einfärbung ist hierbei nicht nur auf mögliche vollflächig gedruckte farbmittelhaltige Lagen im Inneren eines Brillenglases beschränkt, sondern ermöglicht beispielsweise auch individuelle Muster und/oder individuelle Schriftzüge im Brillenglas. Jedes Volumenelement kann wenigstens ein Farbmittel umfassen, welches verschieden oder identisch zu dem wenigstens einen Farbmittel eines benachbarten Volumenelements sein kann. Weiterhin kann auch ein Volumenelement wenigstens ein Farbmittel und das benachbarte Volumenelement kein Farbmittel umfassen. Die benachbarten Volumenelemente können hierbei sowohl nebeneinander als auch übereinander vorliegen. Somit sind in Bezug auf eine individuelle Einfärbung des Brillenglases der Gestaltungsmöglichkeit kaum Grenzen gesetzt. Ein herkömmliches Verfahren zur Herstellung gefärbter Brillengläser umfasst das Eintauchen der Brillengläser in Färbebecken. Gemäß einem derartigen Verfahren können beispielsweise Farbgradienten durch unterschiedlich lange Verweilzeiten eines Brillenglases im Färbebecken erhalten werden, indem die Brillengläser langsam aus ebendiesem Färbebecken herausgezogen werden. Das erfindungemäße Druckverfahren, insbesondere 3D-Druckverfahren, des Brillenglases ermöglicht im Unterschied zu herkömmlichen Färbeverfahren die Einstellung beliebiger Farbgradienten im Brillenglas. Das erfindungsgemäße Druckverfahren, insbesondere 3D-Druckverfahren, ermöglicht beispielsweise Farbgradienten von einem Farbton mit einer Absorption von 5% zu einem Farbton mit einer Absorption von 95% und anschließend wieder zu einem Farbton mit einer Absorption von 11%. Der Farbgradient kann hierbei, betrachtet von der Vorderfläche eines Brillenglases aus, entweder horizontal, in einem Bogen, in einer Zickzacklinie, in einer Wellenlinie, kreisförmig, kreisförmig konzentrisch, rechteckig, rechteckig konzentrisch oder in jeder weiteren, beliebigen Form verlaufen. Weiterhin kann der Farbgradient innerhalb eines Farbtons variieren, oder der Farbgradient kann voneinander verschiedene Farbtöne, wie beispielsweise einen Blauton und einen Orangeton, umfassen.

Die Einbettung der wenigstens einen farb- und/oder effektgebenden Lage im Inneren des erfindungsgemäßen Brillenglases hat den Vorteil, dass oberflächliche Kratzer im Brillenglas die farb- und/oder effektgebende Lage nicht beschädigen. Die farb- und/oder effektgebende Lage befindet sich vorzugsweise so weit von der Vorderfläche und von der Rückfläche des Brillenglases entfernt, dass auch tiefergehende Kratzer nicht die farb- und/oder effektgebende Lage erreichen und somit nicht als helle Linien innerhalb der farb- und/oder effektgebenden Schicht in Erscheinung treten. Ein weiterer Vorteil der Einbettung der wenigstens einen farb- und/oder effektgebenden Lage im Inneren des erfindungsgemäßen Brillenglases liegt darin begründet, dass das wenigstens eine Farbmittel der farb- und/oder effektgebenden Lage vorzugsweise während einer nachfolgenden Beschichtung nicht in die Beschichtungslösung diffundiert und damit die Beschichtungslösung für weitere zu beschichtende Brillengläser kontaminiert. Befindet sich eine farb- und/oder effektgebende Schicht auf der Vorderfläche und/oder auf der Rückfläche eines Brillenglases, kann ein Farbmittel in eine darauf aufzubringende Schicht während des Beschichtungsvorgangs diffundieren und deren Eigenschaften verändern. Beispielsweise wird die chemische Vernetzung einer Hartlacklackschicht durch die Anwesenheit eines Farbmittels beeinträchtigt, so dass diese Schicht nicht die gewünschte Härte erreichen kann. Ein an der Oberfläche des Brillenglases befindliches Farbmittel kann die Oberflächenenergie des Brillenglases verändern und damit die Adhäsion nachfolgender Schichten beeinflussen. Außerdem kann durch eine Diffusion des Farbmittels die gewünschte Farbtiefe eines Brillenglases verändert werden. Befindet sich die wenigstens eine farb- und/oder effektgebende Lage im Inneren des Brillenglases, können derartige Effekte nicht mehr auftreten.

Bei einer Ausführungsform wird das erfindungsgemäße Brillenglas mittels einer Drucktinte, vorzugsweise 3D-Drucktinte, umfassend wenigstens ein Farbmittel und einer Drucktinte, vorzugsweise 3D-Drucktinte, ohne Farbmittel einheitenweise aufgebaut. Hierbei kann die Drucktinte, vorzugsweise 3D-Drucktinte, welche das Farbmittel umfasst, wenigstens eine strahlungshärtbare Komponente umfassen, welche verschieden von der strahlungshärtbaren Komponente der Drucktinte, vorzugsweise 3D-Drucktinte, ohne Farbmittel ist. Bevorzugt wird die wenigstens eine strahlungshärtbare Komponente der Drucktinte, vorzugsweise 3D-Drucktinte, umfassend wenigstens ein Farbmittel so ausgewählt, dass die wenigstens eine strahlungshärtbare Komponente kompatibel sowohl zum wenigstens einen Farbmittel als auch zur wenigstens einen strahlungshärtbaren Komponente der Drucktinte, vorzugsweise 3D-Drucktinte, ohne Farbmittel ist. Weiterhin bevorzugt verhindert die wenigstens eine strahlungshärtbare Komponente der Drucktinte, vorzugsweise 3D-Drucktinte, umfassend wenigstens ein Farbmittel, eine Diffusion des Farbmittels in die Drucktinte, vorzugsweise 3D-Drucktinte, ohne Farbmittel. Auf diese Weise können sehr definierte farb- und/oder effektgebende Volumenelemente innerhalb des Brillenglases angeordnet werden.

Bei einer weiteren Ausführungsform der Erfindung wird das Brillenglas entsprechend der Form einer Brillenfassung gedruckt, so dass das Formranden in die Brillenfassung entfällt. Weiterhin kann bei dieser Ausführungsform die für die Befestigung in einer Brillenfassung vorgesehene Nut bzw. Rille, z.B. für Nylorfassungen, oder spezielle Facettenformen, wie z.B. Flach- oder Schmuckfacetten, beim Drucken des Brillenglases bereits berücksichtigt werden. Aussparungen oder Bohrungen, wie sie beispielsweise für randlose Brillen benötigt werden, können bei dieser Ausführungsform materialfrei bleiben, so dass auch hier nachfolgende Bearbeitungsschritte entfallen können. Bei dieser Ausführungsform wird, bei Vorliegen der Formdaten der Brillenfassung, die wenigstens eine farb- und/oder effektgebende Lage nur an diejenige Stellen des Brillenglases gedruckt, an welchen eine Einfärbung und/oder ein anderer Effekt im Brillenglas innerhalb einer Brillenfassung erwünscht ist.

Bei einer bevorzugten Ausführungsform befindet sich die wenigstens eine farb- und/oder effektgebende Lage im Inneren des Brillenglases. Bevorzugt ist die wenigstens eine farb- und/oder effektgebende Lage jeweils wenigstens 10 µm von der Vorderfläche und/oder der Rückfläche des Brillenglases entfernt. Der maximal mögliche Abstand der wenigstens einen farb- und/oder effektgebenden Schicht ist durch die minimale Dicke des Brillenglases begrenzt, für Brillengläser mit negativer Stärke ist diese im Durchblickpunkt, für Brillengläser mit positiver Stärke ist diese am Rand der Brillengläser gegeben. Der Abstand der farb- und/oder effektgebenden Schicht zur Vorderfläche und/oder Rückfläche des Brillenglases beträgt wenigstens 11 µm, bevorzugt wenigstens 29 µm, und ganz besonders bevorzugt wenigstens 47 µm, wobei die Vorderfläche bzw. Rückfläche des Brillenglases ohne weitere Beschichtung gemeint ist.

Bei einer weiteren Ausführungsform befindet sich die wenigstens eine farb- und/oder effektgebende Lage in einem bereits formgerandeten Brillenglas bevorzugt in einem Abstand aus einem Bereich von 0 µm bis 1000 µm, weiter bevorzugt aus einem Bereich von 2 µm bis 500 µm, besonders bevorzugt aus einem Bereich von 3 µm bis 100 µm, und ganz besonders bevorzugt aus einem Bereich von 4 µm bis 50 µm zur Zylinderrandfläche.

Bei einer weiteren Ausführungsform kann die wenigstens farb- und/oder effektgebende Lage wenigstens eine Art an phototropem bzw. photochromem Farbmittel umfassen. Eine wenigstens ein phototropes Farbmittel umfassende Lage ist vorzugsweise maximal 170 µm von der Vorderfläche des Brillenglases entfernt. Bevorzugt befindet sich wenigstens eine, ein phototropes Farbmittel umfassende, Lage in einem Abstand aus einem Bereich von 7 µm bis 147 µm, weiter bevorzugt aus einem Bereich von 17 µm bis 111 µm, besonders bevorzugt aus einem Bereich von 21 µm bis 76 µm, und besonders bevorzugt aus einem Bereich von 27 µm bis 66 µm, jeweils von der Vorderfläche des Brillenglases entfernt, wobei hierbei die Vorderfläche des Brillenglases ohne weitere Beschichtung gemeint ist.

Als phototrope Farbmittel können beispielsweise 3-Dihydrospiro[2H-anthra[2,3-d]imidazol-2,1'cyclohexan]-5,10-dion, 1,3-Dihydrospiro[2H-anthra[2,3-d]imidazol-2,1'-cyclohexan]-6,11-dion, 1,3 Dihydro-4-(phenylthio)spiro[2H-anthra-1,2diimidazol-2,1'-cyclohexan]-6,11-dion, 1,3-Dihydrosprio[2H-anthra[1,2-d]imidazol-2,1'-cycloheptan]-6,11-dion, 1,3,3-Trimethylspiroindol-2,3'-[3H]naphtho[2,1-b]-1,4-oxazin], 2-Methyl-3,3'-spiro-bi-[3H-naphtho[2,1-b]pyran](2-Me), 2-Phenyl-3-methyl-7-methoxy-8'-nitrospiro[4H-1-benzopyran-4,3'-[3H]-naphtho][2,1-b]pyran, Spiro[2H-1benzopyran-2,9'-xanthen], 2,2'Spiro-bi-[2H-1-benzopyran], Ethyl-β-methyl-β-3',3'-dimethyl-6-nitrospiro(2H-2-benzopyran-2,2'-indolin-1'-yl)-propenoat, (1,3-Propandiyl)bis[3',3'-dimethyl-6-nitrospiro[2H-1-benzopyran-2,2'indolin], 3,3'-Dimethyl-6-nitrospiro[2H-1-benzopyrao-2,2'-benzoxazolin], 6'-Methylthio-3,3'-dimethyl-8-methoxy-6-nitrospiro[2H-1-benzopyran-2,2'-benzothiozolin], (1,2-Ethandiyl)bis[8-methoxy-3,3-methyl-6-nitrospiro[2H-1-benzopyran-2,2'-benzothiozolin]], N,N'-bis(3,3'-Dimethyl-6-nitrospiro[2H-1-benzopyran-2,2'(3'H)-benzothioazol-6'-yl)decandiamid], α-(2,5-Dimethyl-3-furyl)ethyliden(Z)-ethylidensuccinanhydrid, α-(2,5-Dimethyl-3-furyl)-α',δ-dimethylfulgid, 2,5-Diphyenl-4-(2'-chlorophenyl)imidazol, [(2',4'-Dinitrophenyl)methyl]-1H-benzimidazol, N,N-Diethyl-2-phenyl-2H-phenanthro[9,10-]imidazol-2-amin, 2-Nitro-3-aminofluoren, 2-Amino-4-(2'-furanyl)-6H-1,3-thiazin-6-thion oder Mischungen hiervon zum Einsatz kommen.

Bei einer weiteren Ausführungsform kann das erfindungsgemäße Brillenglas alternativ oder zusätzlich zur wenigstens einen farb- und/oder effektgebenden Lage wenigstens eine polarisierende Folie umfassen. Die polarisierende Folie befindet sich vorzugsweise nahe der Vorderfläche des erfindungsgemäßen Brillenglases. Die polarisierende Folie umfasst vorzugsweise wenigstens eine polarisierende Folienschicht. Alternativ kann die polarisierende Folie auch einen mehrschichtigen Aufbau umfassen, welcher zusätzlich zur wenigstens einen polarisierenden Folienschicht wenigstens eine Stützschicht umfasst. Die wenigstens eine polarisierende Folienschicht kann beispielsweise Polyvinylalkohol (CAS Nr. 9002-89-5), Polyvinylformal (CAS Nr. 9003-33-2), Polyvinylacetat (CAS Nr. 9003-20-7) oder Mischungen davon und wenigstens einen dichroitischen Farbstoff, wie beispielsweise C.I. Direct Blue 67, C.I. Direct Blue 90, C.I. Direct Blue 200, C.I. Direct Green 59, C.I. Direct Violet 48, C.I. Direct Red 39, C.I. Direct Red 81, C.I. Direct Red 83, C.I. Direct Red 89, C.I. Direct Orange 39, C.I. Direct Orange 72, C.I. Direct Yellow 34, C.I. Direct Green 26, C.I. Direct Green 27, C.I. Direct Green 28, C.I. Direct Green 51, C.I. Direct Black 170, Mischungen hiervon und/oder Iod umfassen. Die wenigstens eine Stützschicht kann beispielsweise wenigstens Cellulose, Polycarbonat, Polyester, Polymethyl(meth)acrylat, Polythiourethan oder Mischungen davon umfassen.

Zur Herstellung eines erfindungsgemäßen Brillenglases mit wenigstens einer polarisierenden Folie wird das Brillenglas bis zu derjenigen Lage, auf die die polarisierende Schicht aufgebracht werden soll, gedruckt, der Druckprozess vorzugsweise nach Aushärtung dieser Lage unterbrochen, die polarisierende Folie auf diese Lage aufgelegt und anschließend der Druckprozess bis zur Fertigstellung des Brillenglases fortgeführt.

Bei einer Ausführungsform umfasst das erfindungsgemäße Brillenglas wenigstens eine polarisierende Folie zusätzlich zu der wenigstens einen farb- und/oder effektgebenden Lage, wobei ausgehend von der Rückfläche des Brillenglases zunächst
a) wenigstens eine farb- und/oder effektgebende Lage
b) wenigstens eine polarisierende Folie
   oder
c) wenigstens eine farb- und/oder effektgebende Lage 1
d) wenigstens eine polarisierende Folie
e) wenigstens eine farb- und/oder effektgebende Lage 2, welche identisch oder verschieden zur farb- und/oder effektgebenden Lage 1 sein kann
   oder
f) wenigstens eine polarisierende Folie
g) wenigstens eine farb- und/oder effektgebende Lage im Inneren des Brillenglases angeordnet sein kann. Die wenigstens eine farb- und/oder effektgebende Lage kann hierbei, unter Berücksichtigung der vorstehend genannten Mindestabstände zu der Vorderfläche, zu der Rückfläche und zu der Zylinderrandfläche über die komplette Fläche oder auch als individuelles Muster im Inneren des Brillenglases vorliegen.

Die polarisierende Folie befindet sich bevorzugt in einem Abstand aus einem Bereich von 53,0 µm bis 1333,0 µm zur Vorderfläche des Brillenglases, besonders bevorzugt aus einem Bereich von 97,0 µm bis 1230,0 µm, und ganz besonders bevorzugt aus einem Bereich von 115,0 µm bis 1127,0 µm, wobei hier jeweils die Vorderfläche ohne weitere Beschichtung gemeint ist.

Die erfindungsgemäß einsetzbare Drucktinte, vorzugsweise 3D-Drucktinte, kann neben dem wenigstens einen Farbstoff, der wenigstens einen strahlungshärtbaren Komponente und dem optional wenigstens einen Lösungsmittel optional wenigstens ein Additiv umfassen. Der Drucktinte, vorzugsweise 3D-Drucktinte, können beispielsweise Dispergiermittel, Antiabsetzmittel, Netzmittel, einschließlich Antikrater- oder Verlaufsadditiven, Biozide, UV-Absorber oder Mischungen hiervon zugesetzt werden.

Dispergiermittel helfen eine homogene Verteilung aller festen Bestandteile in der Drucktinte, vorzugsweise 3D-Drucktinte, zu erreichen. Insbesondere wird eine mögliche Agglomeration der Pigmente vermieden. Als Dispergiermittel können beispielsweise Solsperse 20000, Solsperse 32500, jeweils Fa. Avecia K.K., Disperbyk-102, Disperbyk-106, Disperbyk-111, Disperbyk-161, Disperbyk-162, Disperbyk-163, Disperbyk-164, Disperbyk-166, Disperbyk-180, Disperbyk-190, Disperbyk-191 oder Disperbyk-192, jeweils Fa. Byk-Chemie GmbH, Verwendung finden.

Antiabsetzmittel sollen das Absetzen, insbesondere von Pigmenten in der Drucktinte, vorzugsweise 3D-Drucktinte, verhindern. Beispiele für einsetzbare Antiabsetzmittel sind Byk-405 (Fa. Byk-Chemie GmbH) in Verbindung mit pyrogenem Siliziumdioxid, modifizierte Harnstoffe wie Byk-410, Byk-411 oder Wachse wie Ceramat 250, Cerafak103, Cerafak 106 oder Ceratix 8461, jeweils Fa. Byk-Chemie GmbH.

Netzmittel sind wichtig für die Funktion des Druckkopfs, da auch interne Strukturen, wie beispielsweise Kanäle, Filter, Düsenvorkammern etc. benetzt werden. Beispiele geeigneter Netzmittel umfassen Fettsäurealkylester, Acetylenderivate, fluorierte Ester oder fluorierte Polymere.

Biozide können Drucktinten, vorzugsweise 3D-Drucktinten, zugesetzt werden, um ein Wachstum von Mikroorganismen zu verhindern. Als Biozid können beispielsweise Polyhexamethylenbiguanide, Isothiazolone, Isothiazolinone, wie z.B. 5-Chloro-2-methyl-4-isothiazolin-3-on, 2-Methyl-4-isothiazolin-3-on oder Mischungen hiervon verwendet werden.

Die Auswahl des geeigneten UV-Absorbers, der kompatibel mit den weiteren Komponenten der Drucktinte, insbesondere 3D-Drucktinte, und dem 3D-Druckverfahren sein muss, sowie die Optimierung der Konzentration zur Erzielung einer gewünschten UV-Absorptionseigenschaft kann z.B. mit Hilfe von Simulationsprogrammen unter Berücksichtigung geeigneter Werkstoffdatenbanken bestimmt werden.

Der DE 69534779 T2 entnimmt man eine Auswahl geeigneter UV-Absorber für Brillengläser, welche auch in der erfindungsgemäß einsetzbaren Drucktinte, vorzugsweise 3D-Drucktinte, eingesetzt werden können. Demzufolge kann der UV-Absorber beispielsweise 2(2'-Hydroxy-5'-methylphenyl)benzotriazol, 2-Hydroxy-4-n-acetoxybenzophenon, 2(2'Hydroxy-5-5-octylphenyl)benzotriazol, 2(2'-Hydroxy-3',6'(1,1-dimethylbenzylphenyl)benzotriazol, 2(2'-Hydroxy-3',5'-di-t-amylphenyl)benzotriazol, bis [2-Hydroxy-5-methyl-3 -(benzotriazol-2-yl)phenyl] -methan, bis [2-Hydroxy-5-t-octyl-3(benzotriazol-2-yl)phenyl]-methan, 2-Hydroxy-4-(2-acrylocyloxy-ethoxybenzophenon, 2-Hydroxy-4-(2-hydroxy-3-methacryloxy)propoxybenzophenon, 2,2'-Dihydroxy-4-methoxybenzophenon, 2,4-Dihydroxybenzophenon, 2,2'-Dihydroxy 4,4-dimethoxybenzophenon, 2,2',4,4' Tetrahydroxybenzophenon, Ethyl-2-Cyano-3,3-diphenylacrylat, 2-Ethexyl-2-Cyano-3,3-Diphenylaciylat, 2',2',4-Trihydroxybenzophenon, 2-Hydroxy-4-acryloyloxyethoxybenzophenon (Polymer), 2-Hydroxy-4-acryloyloxyethoxybenzophenon, 4-Hydroxy-4-methoxybenzophenon, 2-Hydroxy-4-n-octoxybenzophenon oder Mischungen davon umfassen.

Bevorzugt umfasst die erfindungsgemäß einsetzbare Drucktinte, vorzugsweise 3D-Drucktinte, 2(2'Hydroxy-5-5-octylphenyl)benzotriazol, 2(2'-Hydroxy-5'-methyl-phenyl)benzotriazol, 2(2'Hydroxy-5-5-octylphenyl)benzotriazol, 2-Hydroxy-4-(2-hydroxy-3-methacryloxy)propoxybenzophenon oder Mischungen davon, besonders bevorzugt 2(2'Hydroxy-5-5-octylphenyl)benzotriazol, 2(2'Hydroxy-5-5-octylphenyl)benzotriazol oder Mischungen davon als UV-Absorber.

Der Gesamtanteil an wenigstens einem UV-Absorber liegt in der erfindungsgemäß einsetzbaren Drucktinte, vorzugsweise UV-Drucktinte, bevorzugt in einem Bereich von 0,01 Gew.-% bis 5,1 Gew.-%, besonders bevorzugt in einem Bereich von 0,07 Gew.-% bis 3,9 Gew.-%, und besonders bevorzugt in einem Bereich von 0,09 Gew.-% bis 3,1 Gew.-%, jeweils bezogen auf das Gesamtgewicht der erfindungsgemäß einsetzbaren Drucktinte, vorzugsweise 3D-Drucktinte. Vorstehend genannte Bereiche beziehen sich sowohl auf die Verwendung eines UV-Absorbers als auch auf die Verwendung einer Mischung von UV-Absorbern.

Der Gesamtanteil an wenigstens einem Additiv liegt in der erfindungsgemäß einsetzbaren Drucktinte, vorzugsweise 3D-Drucktinte, bevorzugt in einem Bereich von 0,0 Gew.-% bis 10,0 Gew.-%, besonders bevorzugt in einem Bereich von 0,01 Gew.-% bis 5,0 Gew.-%, und ganz besonders bevorzugt in einem Bereich von 0,02 Gew.-% bis 3,0 Gew.-%, jeweils bezogen auf das Gesamtgewicht der Drucktinte, vorzugsweise 3D-Drucktinte. Die genannten Bereiche gelten für die Verwendung einer Art an Additiv, einer Mischung aus voneinander verschiedenen Additivarten sowie einer Mischung aus voneinander verschiedenen Additiven einer Additivart.

Es versteht sich von selbst, dass die einzelnen Komponenten der erfindungsgemäß einsetzbaren Drucktinte, vorzugsweise 3D-Drucktinte, so auszuwählen sind, dass sich deren Anteile nicht auf über 100 Gew.-% addieren.

Das Verfahren zur Herstellung eines Brillenglases umfassend wenigstens eine farb- und/oder effektgebende Lage und/oder wenigstens eine polarisierende Folie umfasst die folgenden Schritte:
a) Bereitstellen eines dreidimensionalen Modells des Brillenglases,
b) Digitales Zerschneiden des dreidimensionalen Modells aus Schritt a) in einzelne zweidimensionale Lagen,
c) Bereitstellen wenigstens einer Drucktinte 1, vorzugsweise 3D-Drucktinte 1, wobei die Drucktinte 1 wenigstens eine strahlungshärtbare Komponente umfasst,
d) Bereitstellen wenigstens einer Drucktinte 2, vorzugsweise 3D-Drucktinte 2, wobei die Drucktinte 2 wenigstens eine strahlungshärtbare Komponente und wenigstens ein Farbmittel umfasst,
e) optional Bereitstellen einer polarisierenden Folie,
f) Aufbau des Brillenglases aus der Summe der einzelnen zweidimensionalen Lagen aus Schritt b) mittels eines Druckvorgangs auf einem Substrat, wobei die Teile des Brillenglases, welche keine farb- und/oder effektgebende Lage umfassen, aus die Drucktinte 1 umfassenden Volumenelementen, die Teile des Brillenglases, welche wenigstens eine farb- und/oder effektgebende Lage umfassen, aus die Drucktinte 2 umfassenden Volumenelementen aufgebaut wird, und wobei der Druckvorgang für die Anbringung der optionalen polarisierenden Folie aus Schritt e) unterbrochen und anschließend wieder fortgesetzt wird,
g) Aushärtung des Brillenglases mittels UV-Licht, wobei die Aushärtung nach Aufbringung einzelner Volumenelemente oder nach Aufbringung einer Lage an Volumenelementen jeweils vollständig oder partiell erfolgen kann, und die partielle Aushärtung nach Abschluss des Druckprozesses vervollständigt werden kann,
h) optional Fräsen und/oder Schleifen und/oder Drehen und/oder Polieren des in Schritt g) erhaltenen Brillenglases,
i) optional Nachbeschichtung des in Schritt g) erhaltenen Brillenglases mit einer Funktionsschicht,
j) optional Formranden des in Schritt h) oder in Schritt i) erhaltenen Brillenglases.

Das Drucken, vorzugsweise 3D-Drucken, eines Brillenglases beginnt mit der Bereitstellung eines dreidimensionalen Modells, vorzugsweise CAD-Modells. Dieses dreidimensionale Modell definiert die dreidimensionale Geometrie des Brillenglases, d.h. dessen Vorder- und Rückfläche sowie die Zylinderrandfläche. Das dreidimensionale Modell enthält weiterhin alle notwendigen Daten, um die genaue Anordnung der mindestens einen farb- und/oder effektgebenden Lage sowie die genaue Anordnung der optional vorhandenen polarisierenden Folie innerhalb des Brillenglases zu definieren. Aus der Analyse des dreidimensionalen Modells ergeben sich die Regionen innerhalb des Brillenglases, die besonders anfällig für Farbvariationen oder Änderungen der Farbwahrnehmung sind. Vorzugsweise wird das Farbmittel der wenigstens einen farb- und/oder effektgebenden Lage so ausgewählt, dass von vornherein eine Farbkorrektur vorgenommen wird, um die Wirkung der zu erwartenden Farbvariationen oder Änderungen der Farbwahrnehmung zu kompensieren. Das Brillenglas wird dann vorzugsweise basierend auf dem so korrigierten dreidimensionalen Modell gedruckt, vorzugsweise mittels eines 3D-Druckverfahrens.

Bei einer Ausführungsform wird zum Aufbau des Brillenglases ein Substrat oder ein Stützmaterial auf einem Substrat eingesetzt wird, wobei das Substrat oder das Stützmaterial jeweils vorzugsweise der Negativform der Vorderfläche des Brillenglases entspricht. Somit entfallen nach dem Ablösevorgang vom Substrat bzw. Stützmaterial vorzugsweise weitere mechanische Bearbeitungsschritte der Vorderfläche.

Bei einer Ausführungsform wird die gewünschte Einfärbung des Brillenglases mittels verschiedener Farbmittel vorab berechnet. Die Absorption des Brillenglases ergibt sich aus der Zahl der farbig übereinander gedruckten Volumenelemente. Dabei erscheint die Farbe des Brillenglases für den Nutzer als Summe aller Absorptionen im Brillenglas. Entsprechend können im dreidimensionalen Modell mehrere Lage mit jeweils mindestens einer farbgebenden Komponente übereinander gestapelt werden. Die additive Wirkung von mindestens zwei farbstoffhaltigen Lagen kann berechnet werden.

Bei einer weiteren Ausführungsform kann eine Einfärbung des Brillenglases alternativ oder zusätzlich zur wenigstens einen gedruckten, farb- und/oder effektgebenden Lage mit löslichen Farbmitteln der gedruckten Brillengläser, vorzugsweise 3D-gedruckten Brillengläser, über konventionelle Färbtechniken und Färbeprozesse erfolgen.

Bei einer weiteren Ausführungsform kann die Brillenfassung ebenfalls mittels eines 3D-Druckverfahrens hergestellt werden. Vorzugsweise werden hierbei die Brillenbügel, entweder räumlich separat im gleichen Druckvorgang oder mit einem weiteren 3D-Drucker zu dem Teil der Brillenfassung, in welche die Gläser eingesetzt werden, gedruckt und anschließend mittels eines Scharniers, eines Clipverschlusses, einer Steck- und/oder Magnetverbindung miteinander verbunden. Als Substrat kann hierfür die entsprechenden Negativform der einzelnen Teile der Brillenfassung oder auch ein planes Substrat mit oder ohne Stützstruktur in Negativform dienen. Die einzelnen Teile der Brillenfassung werden vorzugsweise lagenweise in einer Ebene aufgebaut. Die erfindungsgemäßen Brillengläser können anschließend in die Brillenfassung eingesetzt werden. Diese Ausführungsform umfasst vorzugsweise die folgenden Verfahrensschritte:
a) Bereitstellen jeweils eines dreidimensionalen Modells des die Brillengläser zumindest teilweise umfassenden Teils der Brillenfassung und der Brillenbügel,
b) digitale Zerlegung des jeweiligen dreidimensionalen Modells aus Schritt a) jeweils in einzelne zweidimensionale Lagen,
c) Bereitstellen wenigstens einer Drucktinte, vorzugsweise 3D-Drucktinte, umfassend wenigstens eine strahlungshärtbare Komponente und optional wenigstens ein Farbmittel,
d) Aufbau des die Brillengläser zumindest teilweise umfassenden Teils der Brillenfassung und Aufbau der Brillenbügel mittels den die Drucktinte aus Schritt c) umfassenden Volumenelementen, wobei die erste Lage an Volumenelementen auf einem Substrat oder einem Substrat mit Stützstruktur aufgebaut wird und wobei das Substrat bzw. die Stützstruktur vorzugsweise die Negativform der zu druckenden Teile darstellt,
e) Aushärtung der in Schritt d) aufgebauten Teile der Brillenfassung mittels UV-Licht, wobei die Aushärtung nach Aufbringung einzelner Volumenelemente oder nach Aufbringung einer Lage an Volumenelementen jeweils vollständig oder partiell erfolgen kann und die partielle Aushärtung nach Abschluss des Druckprozesses vervollständigt werden kann,
f) Ablösen der in Schritt e) ausgehärteten Teile der Brillenfassung vom Substrat oder von der Stützstruktur und Verbinden der Teile mittels eines Scharniers, eines Clips, einer Steckverbindung und/oder einer Magnetverbindung.

Bei einer weiteren Ausführungsform können Brillengläser inklusive der Brillenfassung und innerhalb der Brillenfassung mittels eines 3D-Druckverfahrens hergestellt werden. Vorzugsweise werden hierbei die Brillengläser in dem Teil der Brillenfassung, welcher die Gläser zumindest teilweise umgibt, d.h. dem Mittelteil der Brille, mittels eines 3D-Druckverfahrens hergestellt und anschließend mit den, vorzugsweise ebenfalls mittels eines 3D-Druckverfahrens hergestellten, Brillenbügeln mittels eines Scharniers, eines Clipverschlusses, einer Steckverbindung und/oder einer Magnetverbindung verbunden. Die Brillenbügel können hierbei gleichzeitig mit den Brillengläsern und dem Teil der Brillenfassung, welcher die Brillengläser zumindest teilweise umgibt, d.h. dem Mittelteil, in demselben Druckvorgang gedruckt werden, wobei die Brillenbügel räumlich getrennt zum Mittelteil mit Brillengläsern gedruckt werden. Alternativ können die Brillenbügel auch in einem nachfolgenden Druckvorgang oder einem separaten 3D-Drucker gedruckt werden. Die Brillenbügel können entweder auf eine Negativform eines Substrats oder einer substratgestützten Stützstruktur oder auf ein planes Substrat gedruckt und anschließend durch mechanische Bearbeitung in die gewünschte Form gebracht werden. Die Brillenfassung mit Brillengläsern, aber ohne Brillenbügel, d.h. der Mittelteil der Brille mit Brillengläsern, wird vorzugsweise auf einem Substrat oder einer substratgestützten Stützstruktur gedruckt, welches bzw. welche der jeweils der Negativform der jeweiligen Vorderfläche des Brillenglases und dem Mittelteil der Brille entspricht. Auf diese Weise wird gewährleistet, dass die jeweilige Vorderfläche des Brillenglases, abgesehen vom Ablöseprozess des Brillenglases und des Mittelteils der Brille vom Substrat bzw. der Stützstruktur, vorzugsweise keinen weiteren mechanischen Bearbeitungsschritt benötigt. Alternativ kann auch auf ein ein planes Substrats gedruckt und weitere Bearbeitungsschritte zur Formgebung in Kauf genommen werden. Hierbei kann die Drucktinte, vorzugsweise 3D-Drucktinte, welche zum Aufbau der beiden Brillengläser eingesetzt wird, identisch oder verschieden von der Drucktinte, vorzugsweise 3D-Drucktinte, welche zum Aufbau des Mittelteils und der Brillenbügel eingesetzt wird, sein. Die Drucktinte, vorzugsweise 3D-Drucktinte, welche zum Aufbau der Brillenfassung eingesetzt werden kann, umfasst vorzugsweise wenigstens ein Farbmittel, wobei der Anteil an Farbmittel hierbei bevorzugt in einem Bereich von 1,2 Gew.-% bis 32,0 Gew.-%, besonders bevorzugt in einem Bereich von 2,8 Gew.-% bis 27,7 Gew.-%, und ganz besonders bevorzugt in einem Bereich von 3,6 Gew.-% bis 21,3 Gew.-%, jeweils bezogen auf das Gesamtgewicht der Drucktinte, vorzugsweise 3D-Drucktinte, liegt. Die zum Aufbau des Brillenglases und die zum Aufbau der Brillenfassung einsetzbare Drucktinte, vorzugsweise 3D-Drucktinte, kann identische oder voneinander verschiedene strahlungshärtbare Komponente(n) aufweisen. Vorzugsweise umfasst die zum Aufbau des Brillenglases und die zum Aufbau der Brillenfassung einsetzbare Drucktinte, vorzugsweise 3D-Drucktinte, identisch strahlungshärtbare Komponente(n).

Diese Ausführungsform umfasst vorzugsweise die folgenden Verfahrensschritte:
a) Bereitstellen jeweils eines dreidimensionalen Modells des jeweiligen Brillenglases, des Teils der Brillenfassung, welcher die Brillengläser zumindest teilweise umgibt sowie der Brillenbügel,
b) Digitales Zerschneiden der jeweiligen dreidimensionalen Modelle aus Schritt a) in einzelne zweidimensionale Lagen,
c) Bereitstellen wenigstens einer Drucktinte 1, vorzugsweise 3D-Drucktinte 1, wobei die Drucktinte 1 wenigstens eine strahlungshärtbare Komponente umfasst,
d) Bereitstellen wenigstens einer Drucktinte 2, vorzugsweise 3D-Drucktinte 2, wobei die Drucktinte 2 wenigstens eine strahlungshärtbare Komponente und wenigstens ein Farbmittel umfasst,
e) Bereitstellen wenigstens einer Drucktinte 3, vorzugsweise 3D-Drucktinte 3, wobei die Drucktinte 3 wenigstens eine strahlungshärtbare Komponente und wenigstens ein Farbmittel umfasst, wobei die wenigstens eine strahlungshärtbare Komponente und das wenigstens eine Farbmittel jeweils identisch oder verschieden zu der strahlungshärtbaren Komponente und/oder dem Farbmittel der Drucktinte 2 sein können und/oder die wenigstens eine strahlungshärtbare Komponente identisch oder verschieden zu der strahlungshärtbaren Komponente der Drucktinte 1 sein kann,
f) optional Bereitstellen einer polarisierenden Folie,
g) Aufbau der Brillengläser, des Teils der Brillenfassung, welcher die Brillengläser zumindest teilweise umgibt, und der Brillenbügel, jeweils aus der Summe der einzelnen zweidimensionalen Lagen aus Schritt b) mittels eines Druckvorgangs, wobei die Teile des Brillenglases, welche keine farb- und/oder effektgebende Lage umfassen, aus den die Drucktinte 1 umfassenden Volumenelementen, die Teile des Brillenglases, welche wenigstens eine farb- und/oder effektgebende Lage umfassen, aus den die Drucktinte 2 umfassenden Volumenelementen aufgebaut wird, die Teile der Brillenfassung aus den die Drucktinte 3 umfassenden Volumenelementen aufgebaut werden, und wobei der Druckvorgang für die Anbringung der optionalen polarisierenden Folie aus Schritt f) innerhalb des Brillenglases unterbrochen und anschließend wieder fortgesetzt wird,
h) Aushärtung der Brillengläser, des Teils der Brillenfassung, welcher die Brillengläser zumindest teilweise umgibt, und der Brillenbügel jeweils mittels UV-Licht, wobei die Aushärtung nach Aufbringung einzelner Volumenelemente oder nach Aufbringung einer Lage an Volumenelementen jeweils vollständig oder partiell erfolgen kann und die partielle Aushärtung nach Abschluss des Druckprozesses vervollständigt werden kann,
i) Ablösen der in Schritt h) ausgehärteten Brillengläser, des Teils der Brillenfassung, welcher die Brillengläser zumindest teilweise umgibt sowie der Brillenbügel vom Substrat oder von der Stützstruktur und Verbinden des Teils der Brillenfassung, welcher die Brillengläser zumindest teilweise umgibt mit den Brillenbügeln mittels eines Scharniers, eines Clips, einer Steckverbindung und/oder einer Magnetverbindung.

Werden die Brillengläser mitsamt der Brillenfassung mittels eines 3D-Druckverfahrens hergestellt, so werden hierbei alle relevanten Optimierungsparameter wie zum Bespiel individuelle Mess- und Anamnesedaten des Trägers, u.a. Hornhautscheitelabstand, Pupillenabstand, Fassungsvorneigung, Fassungsscheibenwinkel, Durchblickpunkte, Sehgewohnheiten, von vorneherein mit berücksichtigt.

Die nach dem vorstehend beschriebenen Druckverfahren herstellbaren Brillengläser können abschließend noch mit wenigstens einer Funktionsschicht versehen werden. Derartige Funktionsschichten sind Schichten, die die Brillengläser mit vorbestimmten und für den Brillenträger vorteilhaften Eigenschaften ausstatten. Diese Eigenschaften sind den Brillengläsern aufgrund der Komposition der Drucktinte, vorzugsweise 3D-Drucktinte, oder der im 3D-Druckverfahren ausgewählten Formgebung nicht gegeben. Derartige vorteilhafte Eigenschaften sind neben optischen Eigenschaften wie z.B. Entspiegelung, Verspiegelung, Lichtpolarisierung usw. auch mechanische Eigenschaften wie Härtung, Verminderung des Anhaftens von Schmutz oder des Beschlagens usw. und/oder elektrische Eigenschaften wie Abschirmung von elektromagnetischer Strahlung, Leitung von elektrischem Strom usw. und/oder andere physikalische oder chemische Eigenschaften. Beispiele für Funktionsbeschichtungen entnimmt man z.B. den Dokumenten WO 10/109154 A1, WO 01/55752 A1 und DE 10 2008 041 869 A1.

Bei einer Ausführungsform umfassen die erfindungsgemäßen Brillengläser, ausgehend von der Vorderfläche oder der Rückfläche des Brillenglases
a) wenigstens eine Hartlackschicht, wobei zur Herstellung der Hartlackschicht vorzugsweise eine Zusammensetzung umfassend wenigstens ein Silanderivat (R⁴O)Si(OR¹)(OR²)(OR³), wobei R¹, R², R³, R⁴ gleich oder verschieden voneinander, substituiert oder nicht substituiert sein können und R¹, R², R³, R⁴ aus der Gruppe bestehend aus Alkyl, Acyl, Alkylenacyl, Cycloalkyl, Aryl und Alkylenaryl ausgewählt sein kann sowie wenigstens ein Silanderivat R⁶R⁷₃₋ₙSi(OR⁵)ₙ, wobei R⁵ aus der Gruppe bestehend aus Alkyl, Acyl, Alkylenacyl, Cycloalkyl, Aryl und Alkylenaryl ausgewählt sein kann, R⁵ substituiert oder nicht substituiert sein kann, R⁶ ein organischer Rest ist, welcher eine Epoxidgruppe umfasst, R⁷ aus der Gruppe bestehend aus Alkyl, Cycloalkyl, Aryl und Alkenylaryl ausgewählt sein kann, R⁷ substituiert oder nicht substituiert sein kann, eingesetzt werden kann,
b) wenigstens eine Antireflexschicht, welche vorzugsweise wenigstens drei diskrete Schichten, jeweils aus oder mit wenigstens einem Metalloxid, Metallhydroxid und/oder Metalloxidhydrat von Al, Si, Ti, Zr, Ce, Sn, In, Cr und/oder Mischungen hiervon umfasst, wobei die am weitesten von der Vorderfläche bzw. Rückfläche des nicht beschichteten Brillenglases entfernte Schicht der Antireflexschicht Siliziumoxid, Siliziumhydroxid und/oder Siliziumoxidhydrat umfasst,
c) optional eine Antifog-Beschichtung, erhältlich durch kovalente Anbindung eines Silanderivats der Formel RₒXₘSiBₙ an die Oberfläche der Antireflexschicht aus Schritt b) und Quervernetzung benachbarter Moleküle, wobei m=1-3, n=1-2 und o=0-1, unter der Voraussetzung, dass m+n+o=4, der Rest X ausgewählt wird aus Halogen oder Cl-4-Alkoxy, wobei für m=2-3 die einzelnen Reste X gleich oder unterschiedlich sein können, der Rest R C1-4 Alkyl ist, der Rest B die Struktur -B1-B2 aufweist, in der B2 eine endständige hydrophile Gruppe ist, die mit mindestens einer hydrophilen Gruppe eines benachbarten Moleküls der Antifog-Schicht quervernetzt ist, und -B1-entweder eine Spacer-Gruppe, die die hydrophile Gruppe B2 mit dem Si-Atom verbindet oder eine kovalente Bindung darstellt, wobei die endständige hydrophile Gruppe B2 Poly(meth)acrylat ist, wobei für n=2 die einzelnen Reste B gleich oder unterschiedlich sein können, und wobei das Poly(meth)acrylat der endständigen hydrophilen Gruppe B2 Monomereinheiten umfasst, die aus CH₂=C(CH₃)COOC_{1-4-Alkyl}, CH₂=C(H)COOC_{1-4-Alkyl,} Hydroxyethylenmethacrylat, 2-Acrylamido-2-methylpropansulfonsäure, Trimethylolpropantriacrylat oder Pentaerythritoltetraacrylat oder deren Gemischen ausgewählt werden.

## Patentansprüche

1. Brillenglas umfassend wenigstens eine farb- und/oder effektgebende Lage im Inneren desselben, das Brillenglas erhältlich durch einheitenweise Anordnung wenigstens eines Volumenelements einer Drucktinte, vorzugsweise 3D-Drucktinte, ohne Farbmittel, und durch einheitenweise Anordnung wenigstens eines Volumenelements einer Drucktinte, vorzugsweise 3D-Drucktinte, umfassend wenigstens ein Farbmittel, die Drucktinte jeweils umfassend wenigstens eine strahlungshärtbare Komponente, wobei die farb- und/oder effektgebende Lage wenigstens ein Volumenelement einer Drucktinte mit wenigstens einem Farbmittel umfasst, die strahlungshärtbare Komponente der Drucktinte umfassend wenigstens ein Farbmittel so ausgewählt, dass die wenigstens eine strahlungshärtbare Komponente kompatibel sowohl zum wenigstens einen Farbmittel als auch zur wenigstens einen strahlungshärtbaren Komponente der Drucktinte ohne Farbmittel ist,
**dadurch gekennzeichnet, dass** der Gesamtanteil an Farbmittel in dem Brillenglas in einem Bereich von 0,01 Gew.-% bis 8,0 Gew.-%, bezogen auf das Gesamtgewicht des Brillenglases, liegt und wobei der Abstand der farb- und/oder effektgebenden Lage zur Vorderfläche und Rückfläche des Brillenglases, jeweils ohne weitere Beschichtung, wenigstens 11 µm beträgt.

2. Brillenglas nach Anspruch 1, **dadurch gekennzeichnet, dass** i) der Gesamtanteil an Farbstoff und/oder organischem Pigment in einem Bereich von 0,02 Gew.-% bis 8,0 Gew.-% und/oder ii) der Gesamtanteil an anorganischem Pigment in einem Bereich von 0,0 Gew.-% bis 8,0 Gew.-% und/oder iii) der Gesamtanteil an Metalleffektpigment in einem Bereich von 0,0 Gew.-% bis 4,0 Gew.-% und/oder iv) der Gesamtanteil an Perlglanzpigment in einem Bereich von 0,0 Gew.-% bis 7,0 Gew.-%, jeweils bezogen auf das Gesamtgewicht des Brillenglases liegt.

3. Brillenglas nach einem der vorstehenden Ansprüche, **dadurch gekennzeichnet, dass** das Brillenglas wenigstens eine Art an organischem Farbstoff oder eine Mischung aus voneinander verschiedenen organischen Farbstoffen in einem Gesamtanteil aus einem Bereich von 0,1 Gew.-% bis 6,0 Gew.-% und wenigstens eine Art an Perlglanzpigment in einem Anteil aus einem Bereich von 0,2 Gew.-% bis 6,0 Gew.-%, jeweils bezogen auf das Gesamtgewicht des Brillenglases, umfasst.

4. Brillenglas nach einem der vorstehenden Ansprüche, **dadurch gekennzeichnet, dass** sich die wenigstens eine farb- und/oder effektgebende Lage in dem bereits formgerandeten Brillenglas in einem Abstand aus einem Bereich von 0 µm bis 1000 µm zur Zylinderrandfläche befindet.

5. Brillenglas nach einem der vorstehenden Ansprüche, **dadurch gekennzeichnet, dass** sich bei komplett eingefärbter Fläche des Brillenglases die wenigstens eine effektpigmenthaltige Lage in einem Abstand aus einem Bereich von 1,2 mm bis 21,0 mm zum Ferndurchblickpunkt bzw. Prismenmesspunkt bei Mehrstärken-/Gleitsichtgläsern befindet, wobei der Abstand auf der Vorderfläche oder der Rückfläche des Brillenglases jeweils zum Ferndurchblickpunkt bzw. Prismenmesspunkt bei Mehrstärken-/Gleitsichtgläsern bestimmt wird.

6. Brillenglas nach einem der vorstehenden Ansprüche, wobei das Farbmittel wenigstens einen phototropen Farbstoff umfasst und sich die wenigstens einen phototropen Farbstoff umfassende farb- und/oder effektgebende Lage in einem Abstand aus einem Bereich von 7 µm bis 147 µm zur Vorderfläche des Brillenglases befindet.

7. Brillenglas nach einem der vorstehenden Ansprüche, wobei das Brillenglas zusätzlich zu der wenigstens einen farb- und/oder effektgebenden Lage wenigstens eine polarisierende Folie umfasst, **dadurch gekennzeichnet, dass** ausgehend von der Rückfläche des Brillenglases zunächst a) wenigstens eine farb- und/oder effektgebende Lage, b) wenigstens eine polarisierende Folie oder c) wenigstens eine farb- und/oder effektgebende Lage 1, d) wenigstens eine polarisierende Folie, e) wenigstens eine farb- und/oder effektgebende Lage 2, welche identisch oder verschieden zur farb- und/oder effektgebenden Lage 1 ist oder f) wenigstens eine polarisierende Folie, g) wenigstens eine farb- und/oder effektgebende Lage im Inneren des Brillenglases angeordnet ist.

8. Brillenglas nach Anspruch 7, wobei sich die wenigstens eine polarisierende Folie in einem Abstand aus einem Bereich von 53,0 µm bis 1333,0 µm zur Vorderfläche des Brillenglases befindet.

9. Brillenglas nach einem der Ansprüche 7 bis 8, wobei die polarisierende Folie wenigstens eine polarisierende Folienschicht und einen mehrschichtigen Aufbau umfasst, welcher zusätzlich zu der wenigstens einen polarisierenden Folienschicht wenigstens eine Stützschicht umfasst.

10. Brillenglas nach einem der vorstehenden Ansprüche, wobei das Brillenglas wenigstens eine Funktionsschicht, ausgewählt aus einer Hartlackschicht, einer Antireflexschicht und/oder einer Antifogschicht, auf der Vorderfläche und/oder der Rückfläche des Brillenglases umfasst.

11. Brillenglas nach Anspruch 10, **dadurch gekennzeichnet, dass** das Brillenglas ausgehend von der Vorderfläche oder der Rückfläche des Brillenglases a) wenigstens eine Hartlackschicht, wobei zur Herstellung der Hartlackschicht vorzugsweise eine Zusammensetzung umfassend wenigstens ein Silanderivat (R⁴O)Si(OR¹)(OR²)(OR³), wobei R¹, R², R³, R⁴ gleich oder verschieden voneinander, substituiert oder nicht substituiert sind und R¹, R², R³, R⁴ aus der Gruppe bestehend aus Alkyl, Acyl, Alkylenacyl, Cycloalkyl, Aryl und Alkylenaryl ausgewählt ist sowie wenigstens ein Silanderivat R⁶R⁷₃₋ₙSi(OR⁵)ₙ, wobei R⁵ aus der Gruppe bestehend aus Alkyl, Acyl, Alkylenacyl, Cycloalkyl, Aryl und Alkylenaryl ausgewählt ist, R⁵ substituiert oder nicht substituiert ist, R⁶ ein organischer Rest ist, welcher eine Epoxidgruppe umfasst, R⁷ aus der Gruppe bestehend aus Alkyl, Cycloalkyl, Aryl und Alkenylaryl ausgewählt ist, R⁷ substituiert oder nicht substituiert ist, eingesetzt wird, b) wenigstens eine Antireflexschicht, welche vorzugsweise wenigstens drei diskrete Schichten, jeweils aus oder mit wenigstens einem Metalloxid, Metallhydroxid und/oder Metalloxidhydrat von Al, Si, Ti, Zr, Ce, Sn, In, Cr und/oder Mischungen hiervon umfasst, wobei die am weitesten von der Vorderfläche bzw. Rückfläche des nicht beschichteten Brillenglases entfernte Schicht der Antireflexschicht Siliziumoxid, Siliziumhydroxid und/oder Siliziumoxidhydrat umfasst, c) optional eine Antifog-Beschichtung, erhältlich durch kovalente Anbindung eines Silanderivats der Formel RₒXₘSiBₙ an die Oberfläche der Antireflexschicht aus Schritt b) und Quervernetzung benachbarter Moleküle, wobei m=1-3, n=1-2 und o=0-1, unter der Voraussetzung, dass m+n+o=4, der Rest X ausgewählt wird aus Halogen oder C 1-4-Alkoxy, wobei für m=2-3 die einzelnen Reste X gleich oder unterschiedlich sind, der Rest R C1-4 Alkyl ist, der Rest B die Struktur -B1-B2 aufweist, in der B2 eine endständige hydrophile Gruppe ist, die mit mindestens einer hydrophilen Gruppe eines benachbarten Moleküls der Antifog-Schicht quervernetzt ist, und -B1-entweder eine Spacer-Gruppe, die die hydrophile Gruppe B2 mit dem Si-Atom verbindet oder eine kovalente Bindung darstellt, wobei die endständige hydrophile Gruppe B2 Poly(meth)acrylat ist, wobei für n=2 die einzelnen Reste B gleich oder unterschiedlich sind, und wobei das Poly(meth)acrylat der endständigen hydrophilen Gruppe B2 Monomereinheiten umfasst, die aus CH₂=C(CH₃)COOC_{1-4-Alkyl}, CH₂=C(H)COOC_{1-4-Alkyl}, Hydroxyethylenmethacrylat, 2-Acrylamido-2-methylpropansulfonsäure, Trimethylolpropantriacrylat oder Pentaerythritoltetraacrylat oder deren Gemischen ausgewählt werden, umfasst.

12. Verfahren zur Herstellung wenigstens eines Brillenglases gemäß einem der vorstehenden Ansprüche umfassend wenigstens eine farb- und/oder effektgebende Lage und optional wenigstens eine polarisierende Folie, wobei das Verfahren die folgenden Schritte umfasst:
a) Bereitstellen eines dreidimensionalen Modells des Brillenglases,
b) Digitales Zerschneiden des dreidimensionalen Modells aus Schritt a) in einzelne zweidimensionale Lagen,
c) Bereitstellen wenigstens einer Drucktinte 1, vorzugsweise 3D-Drucktinte 1, wobei die Drucktinte 1 wenigstens eine strahlungshärtbare Komponente umfasst,
d) Bereitstellen wenigstens einer Drucktinte 2, vorzugsweise 3D-Drucktinte 2, wobei die Drucktinte 2 wenigstens eine strahlungshärtbare Komponente und wenigstens ein Farbmittel umfasst,
e) optional Bereitstellen einer polarisierenden Folie,
f) Aufbau des Brillenglases aus der Summe der einzelnen zweidimensionalen Lagen aus Schritt b) mittels eines Druckvorgangs auf einem Substrat, wobei die Teile des Brillenglases, welche keine farb- und/oder effektgebende Lage umfassen, aus den die Drucktinte 1 umfassenden Volumenelementen, die Teile des Brillenglases, welche wenigstens eine farb- und/oder effektgebende Lage umfassen, aus den die Drucktinte 2 umfassenden Volumenelementen aufgebaut wird, und wobei der Druckvorgang für die Anbringung der optionalen polarisierenden Folie aus Schritt e) unterbrochen und anschließend wieder fortgesetzt wird,
g) Aushärtung des Brillenglases mittels UV-Licht, wobei die Aushärtung nach Aufbringung einzelner Volumenelemente oder nach Aufbringung einer Lage an Volumenelementen jeweils vollständig oder partiell erfolgen kann, und die partielle Aushärtung nach Abschluss des Druckprozesses vervollständigt werden kann,
h) optional Fräsen und/oder Schleifen und/oder Drehen und/oder Polieren des in Schritt g) erhaltenen Brillenglases,
i) optional Nachbeschichtung des in Schritt g) erhaltenen Brillenglases mit einer Funktionsschicht,
j) optional Formranden des in Schritt h) oder in Schritt i) erhaltenen Brillenglases.

13. Verfahren zur Herstellung eines Brillenglases nach Anspruch 12, wobei zum Aufbau des Brillenglases ein Substrat oder ein Stützmaterial auf einem Substrat eingesetzt wird, wobei das Substrat oder das Stützmaterial jeweils der Negativform der Vorderfläche des Brillenglases entspricht.

14. Verfahren zur Herstellung einer Brille, **dadurch gekennzeichnet, dass** das Verfahren die folgenden Verfahrensschritte umfasst:
a) Bereitstellen jeweils eines dreidimensionalen Modells des jeweiligen Brillenglases, des Teils der Brillenfassung, welcher die Brillengläser zumindest teilweise umgibt sowie der Brillenbügel,
b) Digitales Zerschneiden der jeweiligen dreidimensionalen Modelle aus Schritt a) in einzelne zweidimensionale Lagen,
c) Bereitstellen wenigstens einer Drucktinte 1, vorzugsweise 3D-Drucktinte 1, wobei die Drucktinte 1 wenigstens eine strahlungshärtbare Komponente umfasst,
d) Bereitstellen wenigstens einer Drucktinte 2, vorzugsweise 3D-Drucktinte 2, wobei die Drucktinte 2 wenigstens eine strahlungshärtbare Komponente und wenigstens ein Farbmittel umfasst,
e) Bereitstellen wenigstens einer Drucktinte 3, vorzugsweise 3D-Drucktinte 3, wobei die Drucktinte 3 wenigstens eine strahlungshärtbare Komponente und wenigstens ein Farbmittel umfasst, wobei die wenigstens eine strahlungshärtbare Komponente und das wenigstens eine Farbmittel jeweils identisch oder verschieden zu der strahlungshärtbaren Komponente und/oder dem Farbmittel der Drucktinte 2 sein können und/oder die wenigstens eine strahlungshärtbare Komponente identisch oder verschieden zu der strahlungshärtbaren Komponente der Drucktinte 1 sein kann,
f) optional Bereitstellen einer polarisierenden Folie,
g) Aufbau der Brillengläser, des Teils der Brillenfassung, welcher die Brillengläser zumindest teilweise umgibt, und der Brillenbügel, jeweils aus der Summe der einzelnen zweidimensionalen Lagen aus Schritt b) mittels eines Druckvorgangs, wobei die Teile des Brillenglases, welche keine farb- und/oder effektgebende Lage umfassen, aus den die Drucktinte 1 umfassenden Volumenelementen, die Teile des Brillenglases, welche wenigstens eine farb- und/oder effektgebende Lage umfassen, aus den die Drucktinte 2 umfassenden Volumenelementen aufgebaut wird, die Teile der Brillenfassung aus den die Drucktinte 3 umfassenden Volumenelementen aufgebaut werden, und wobei der Druckvorgang für die Anbringung der optionalen polarisierenden Folie aus Schritt f) innerhalb des Brillenglases unterbrochen und anschließend wieder fortgesetzt wird,
h) Aushärtung der Brillengläser, des Teils der Brillenfassung, welcher die Brillengläser zumindest teilweise umgibt, und der Brillenbügel jeweils mittels UV-Licht, wobei die Aushärtung nach Aufbringung einzelner Volumenelemente oder nach Aufbringung einer Lage an Volumenelementen jeweils vollständig oder partiell erfolgen kann und die partielle Aushärtung nach Abschluss des Druckprozesses vervollständigt werden kann,
i) Ablösen der in Schritt h) ausgehärteten Brillengläser, des Teils der Brillenfassung, welcher die Brillengläser zumindest teilweise umgibt sowie der Brillenbügel vom Substrat oder von der Stützstruktur und Verbinden des Teils der Brillenfassung, welcher die Brillengläser zumindest teilweise umgibt mit den Brillenbügeln mittels eines Scharniers, eines Clips, einer Steckverbindung und/oder einer Magnetverbindung.

15. Verfahren zur Herstellung einer Brille gemäß Anspruch 14, **dadurch gekennzeichnet, dass** der Anteil des Farbmittels der Drucktinte 3, vorzugsweise 3D-Drucktinte 3, in einem Bereich von 1,2 Gew.-% bis 32,0 Gew.-%, bezogen auf das Gesamtgewicht der Drucktinte, liegt.

## Claims

1. Spectacle lens comprising at least one colouring and/or effect-imparting slice in the interior thereof, the spectacle lens being obtainable by unit-by-unit arrangement of at least one volume element of a printing ink, preferably 3D printing ink, without colourant, and by unit-by-unit arrangement of at least one volume element of a printing ink, preferably 3D printing ink, comprising at least one colourant, the printing ink in each case comprising at least one radiation-curable component, wherein the colouring and/or effect-imparting slice comprises at least one volume element of a printing ink with at least one colourant, the radiation-curable component of the printing ink comprising at least one colourant being selected such that the at least one radiation-curable component is compatible both with the at least one colourant and with the at least one radiation-curable component of the printing ink without colourant,
**characterized in that** the total proportion of colourant in the spectacle lens is within a range from 0.01% by weight to 8.0% by weight, based on the total weight of the spectacle lens, and where the distance of the colouring and/or effect-imparting slice from the front face and reverse face of the spectacle lens, in each case without further coating, is at least 11 µm.

2. Spectacle lens according to Claim 1, **characterized in that** i) the total proportion of dye and/or organic pigment is within a range from 0.02% by weight to 8.0% by weight and/or ii) the total proportion of inorganic pigment is within a range from 0.0% by weight to 8.0% by weight and/or iii) the total proportion of metal effect pigment is within a range from 0.0% by weight to 4.0% by weight and/or iv) the total proportion of pearlescent pigment is within a range from 0.0% by weight to 7.0% by weight, based in each case on the total weight of the spectacle lens.

3. Spectacle lens according to either of the preceding claims, **characterized in that** the spectacle lens comprises at least one type of organic dye or a mixture of different organic dyes in a total proportion from a range from 0.1% by weight to 6.0% by weight and at least one type of pearlescent pigment in a proportion from a range from 0.2% by weight to 6.0% by weight, based in each case on the total weight of the spectacle lens.

4. Spectacle lens according to any of the preceding claims, **characterized in that** the at least one colouring and/or effect-imparting slice in the already edged spectacle lens is at a distance from a range from 0 µm to 1000 µm from the cylinder edge face.

5. Spectacle lens according to any of the preceding claims, **characterized in that**, in the case of a completely coloured face of the spectacle lens, the at least one effect pigment-containing slice is at a distance from a range from 1.2 mm to 21.0 mm from the far visual point or prism measurement point in the case of multifocal/varifocal lenses, where the distance on the front face or the reverse face of the spectacle lens is determined in each case from the far visual point or prism measurement point in the case of multifocal/varifocal lenses.

6. Spectacle lens according to any of the preceding claims, wherein the colourant comprises at least one phototropic dye and the colouring and/or effect-imparting slice comprising at least one phototropic dye is at a distance from a range from 7 µm to 147 µm from the front face of the spectacle lens.

7. Spectacle lens according to any of the preceding claims, wherein the spectacle lens, in addition to the at least one colouring and/or effect-imparting slice, comprises at least one polarizing film, **characterized in that** the arrangement proceeding from the reverse face of the spectacle lens is firstly a) at least one colouring and/or effect-imparting slice, b) at least one polarizing film or c) at least one colouring and/or effect-imparting slice 1, d) at least one polarizing film, e) at least one colouring and/or effect-imparting slice 2 which is identical to or different from the colouring and/or effect-imparting slice 1 or f) at least one polarizing film, g) at least one colouring and/or effect-imparting slice within the spectacle lens.

8. Spectacle lens according to Claim 7, wherein the at least one polarizing film is at a distance from a range from 53.0 µm to 1333.0 µm from the front face of the spectacle lens.

9. Spectacle lens according to either of Claims 7 and 8, wherein the polarizing film comprises at least one polarizing film layer and a multilayer structure comprising at least one support layer in addition to the at least one polarizing film layer.

10. Spectacle lens according to any of the preceding claims, wherein the spectacle lens comprises at least one function layer selected from a hardcoat layer, an antireflection layer and/or an antifog layer on the front face and/or the reverse face of the spectacle lens.

11. Spectacle lens according to Claim 10, **characterized in that** the spectacle lens, proceeding from the front face or the reverse face of the spectacle lens, comprises a) at least one hardcoat layer, wherein the hardcoat layer is preferably produced using a composition comprising at least one silane derivative (R⁴O) Si (OR¹) (OR²) (OR³) where R¹, R², R³, R⁴ are the same or different, substituted or unsubstituted, and R¹, R², R³, R⁴ are selected from the group consisting of alkyl, acyl, alkyleneacyl, cycloalkyl, aryl and alkylenearyl, and at least one silane derivative R⁶R⁷₃₋ₙSi(OR⁵)ₙ where R⁵ is selected from the group consisting of alkyl, acyl, alkyleneacyl, cycloalkyl, aryl and alkylenearyl, R⁵ is substituted or unsubstituted, R⁶ is an organic radical comprising an epoxy group, R⁷ is selected from the group consisting of alkyl, cycloalkyl, aryl and alkenylaryl, R⁷ is substituted or unsubstituted, b) at least one antireflection layer preferably comprising at least three discrete layers, each composed of or comprising at least one metal oxide, metal hydroxide and/or metal oxide hydrate of Al, Si, Ti, Zr, Ce, Sn, In, Cr and/or mixtures thereof, where the layer of the antireflection layer which is furthest removed from the front face or reverse face of the uncoated spectacle lens comprises silicon oxide, silicon hydroxide and/or silicon oxide hydrate, c) optionally an antifog coating obtainable by covalent binding of a silane derivative of the formula RₒXₘSiBₙ to the surface of the antireflection layer from step b) and crosslinking of adjacent molecules, where m = 1-3, n = 1-2 and o = 0-1, with the proviso that m+n+o = 4, the X radical is selected from halogen and C1-4-alkoxy, where, when m = 2-3, the individual X radicals are the same or different, the R radical is C1-4 alkyl, the B radical has the structure -B1-B2 in which B2 is a terminal hydrophilic group crosslinked with at least one hydrophilic group of an adjacent molecule of the antifog layer, and -B1- is either a spacer group that bonds the hydrophilic B2 group to the silicon atom or is a covalent bond, where the terminal hydrophilic B2 group is poly(meth)acrylate, where, when n = 2, the individual B radicals are the same or different, and where the poly(meth)acrylate in the terminal hydrophilic B2 group comprises monomer units selected from CH₂=C (CH₃) COOC₁₋₄-alkyl, CH₂=C (H) COOC₁₋₄-alkyl, hydroxyethylene methacrylate, 2-acrylamido-2-methylpropanesulfonic acid, trimethylolpropane triacrylate or pentaerythritol tetraacrylate or mixtures thereof.

12. Method of producing at least one spectacle lens according to any of the preceding claims, comprising at least one colouring and/or effect-imparting slice and optionally at least one polarizing film, wherein the method comprises the following steps:
a) providing a three-dimensional model of the spectacle lens,
b) digitally cutting the three-dimensional model from step a) into individual two-dimensional slices,
c) providing at least one printing ink 1, preferably 3D printing ink 1, where the printing ink 1 comprises at least one radiation-curable component,
d) providing at least one printing ink 2, preferably 3D printing ink 2, where the printing ink 2 comprises at least one radiation-curable component and at least one colourant,
e) optionally providing a polarizing film,
f) constructing the spectacle lens from the sum total of the individual two-dimensional slices from step b) by means of a printing operation on a substrate, wherein the parts of the spectacle lens that do not include any colouring and/or effect-imparting slice are formed from the volume elements comprising the printing ink 1, the parts of the spectacle lens comprising at least one colouring and/or effect-imparting slice are formed from the volume elements comprising the printing ink 2, and where the printing operation is stopped for the positioning of the optional polarizing film from step e) and then continued again,
g) curing the spectacle lens by means of UV light, wherein the curing can be effected fully or partially after each application of individual volume elements or after application of a slice of volume elements, and the partial curing can be completed on completion of the printing process,
h) optionally machining and/or grinding and/or turning and/or polishing the spectacle lens obtained in step g),
i) optionally recoating the spectacle lens obtained in step g) with a function layer,
j) optionally edging the spectacle lens obtained in step h) or in step i) .

13. Method of producing a spectacle lens according to Claim 12, wherein the spectacle lens is constructed using a substrate or a support material on a substrate, wherein the substrate or support material corresponds in each case to the negative shape of the front face of the spectacle lens.

14. Method of producing a pair of spectacles, **characterized in that** the method comprises the following steps:
a) providing a three-dimensional model of each spectacle lens, of the part of the spectacle frame that at least partly surrounds the spectacle lenses, and of the sidepieces,
b) digitally cutting the respective three-dimensional models from step a) into individual two-dimensional slices,
c) providing at least one printing ink 1, preferably 3D printing ink 1, where the printing ink 1 comprises at least one radiation-curable component,
d) providing at least one printing ink 2, preferably 3D printing ink 2, where the printing ink 2 comprises at least one radiation-curable component and at least one colourant,
e) providing at least one printing ink 3, preferably 3D printing ink 3, where the printing ink 3 comprises at least one radiation-curable component and at least one colourant, where the at least one radiation-curable component and the at least one colourant may each be identical to or different from the radiation-curable component and/or the colourant of the printing ink 2, and/or the at least one radiation-curable component may be identical to or different from the radiation-curable component of the printing ink 1,
f) optionally providing a polarizing film,
g) constructing the spectacle lenses, the part of the spectacle frame that at least partly surrounds the spectacle lenses and the sidepieces, each from the sum total of the individual two-dimensional slices from step b) by means of a printing operation, wherein the parts of the spectacle lens that do not include any colouring and/or effect-imparting slice are formed from the volume elements comprising the printing ink 1, the parts of the spectacle lens comprising at least one colouring and/or effect-imparting slice are formed from the volume elements comprising the printing ink 2, the parts of the spectacle frame are formed from the volume elements comprising the printing ink 3, and where the printing operation is stopped for the positioning of the optional polarizing film from step f) within the spectacle lens and then continued again,
h) curing the spectacle lenses, the part of the spectacle frame that at least partly surrounds the spectacle lenses and the sidepieces, each by means of UV light, wherein the curing can be effected fully or partially after each application of individual volume elements or after application of a slice of volume elements, and the partial curing can be completed on completion of the printing process,
i) detaching the spectacle lenses, the part of the spectacle frame that at least partly surrounds the spectacle lenses and the sidepieces that have been cured in step h) from the substrate or from the support structure, and joining the part of the spectacle frame that at least partly surrounds the spectacle lenses to the sidepieces by means of a hinge, a clip, a plug connector and/or a magnetic connector.

15. Method of producing a pair of spectacles according to Claim 14, **characterized in that** the proportion of the colourant in the printing ink 3, preferably 3D printing ink 3, is within a range from 1.2% by weight to 32.0% by weight, based on the total weight of the printing ink.

## Revendications

1. Verre de lunette comprenant au moins une couche colorante et/ou à effet dans son volume intérieur, le verre de lunette pouvant être obtenu par disposition individuelle d'au moins un élément de volume d'une encre d'impression, de préférence d'une encre d'impression 3D, sans colorant, et par disposition individuelle d'au moins un élément de volume d'une encre d'impression, de préférence d'une encre d'impression 3D, comprenant au moins un colorant, chaque encre d'impression comprenant au moins un composant durcissable par rayonnement, la couche colorante et/ou à effet comprenant au moins un élément de volume d'une encre d'imprimerie comportant au moins un colorant, le composant durcissable par rayonnement de l'encre d'imprimerie comprenant au moins un colorant choisi de telle sorte que l'au moins un composant durcissable par rayonnement soit compatible tant avec l'au moins un colorant qu'avec l'au moins un composant durcissable par rayonnement de l'encre d'impression sans colorant,
**caractérisé en ce que** la proportion totale du colorant dans le verre de lunette est comprise dans la plage de 0,01 % en poids à 8,0 % en poids par rapport au poids total du verre de lunette, et la distance entre la couche colorante et/ou à effet à la face avant et la face arrière du verre de lunette, dans chaque cas sans revêtement supplémentaire, étant d'au moins 11 µm.

2. Verre de lunette selon la revendication 1, **caractérisé en ce que** i) la proportion totale en colorant et/ou en pigment organique est comprise dans la plage de 0,02 % en poids à 8,0 % en poids et/ou ii) la proportion totale de pigment organique est comprise dans la plage de 0,0 % en poids à 8,0 % en poids et/ou iii) la proportion totale de pigment à effet métallisé est comprise dans la plage de 0,0 % en poids à 4,0 % en poids et/ou iv) la proportion totale de pigment nacré est comprise dans la plage de 0,0 % en poids à 7,0 % en poids, dans chaque cas par rapport au poids total du verre de lunette.

3. Verre de lunette selon l'une des revendications précédentes, **caractérisé en ce que** le verre de lunette comprend au moins un type de colorant organique ou un mélange de colorants organiques différents les uns des autres selon une proportion totale comprise dans la plage de 0,1 % en poids à 6,0 % en poids et au moins un type de pigment nacré selon une proportion comprise dans la plage de 0,2 % en poids à 6,0 % en poids, dans chaque cas par rapport au poids total du verre de lunette.

4. Verre de lunette selon l'une des revendications précédentes, **caractérisé en ce que** l'au moins une couche colorante et/ou à effet se trouve dans le verre de lunette déjà détouré à une distance de la surface du bord cylindrique dans la plage de 0 µm à 1 000 µm.

5. Verre de lunette selon l'une des revendications précédentes, **caractérisé en ce que**, pour une surface entièrement colorée dans la masse du verre de lunette, l'au moins une couche contenant un pigment à effet se trouve à une distance dans la plage de 1,2 mm à 21,0 mm du point de vision de loin ou du point de mesure des effets prismatiques dans le cas de verres multifocaux/progressifs, la distance, sur la surface avant ou la surface arrière du verre de lunette, étant dans chaque cas déterminée par rapport au point de vision de loin ou du point de mesure des effets prismatiques dans le cas de verres multifocaux/progressifs.

6. Verre de lunette selon l'une des revendications précédentes, **caractérisé en ce que** le colorant comprend au moins un colorant phototropique, et l'au moins une couche colorante et/ou à effet, comprenant un colorant phototropique, se trouve à une distance de la surface avant du verre de lunette dans la plage de 7 µm à 147 µm.

7. Verre de lunette selon l'une des revendications précédentes, le verre de lunette comprenant, outre l'au moins une couche colorante et/ou à effet, au moins une feuille polarisante, **caractérisé en ce que**, partant de la face arrière du verre de lunette, on a, disposées dans le volume intérieur du verre de lunette, d'abord a) au moins une couche colorante et/ou à effet, b) au moins une feuille polarisante ou c) au moins une couche 1 colorante et/ou à effet, d) au moins une feuille polarisante, e) au moins une couche 2 colorante et/ou à effet, qui est identique à la couche 1 colorante et/ou à effet ou en est différente, ou f) au moins une feuille polarisante, g) au moins une couche colorante et/ou à effet.

8. Verre de lunette selon la revendication 7, dans lequel l'au moins une feuille polarisante se trouve à une distance de la surface avant du verre de lunette dans la plage de 53,0 µm à 1 333,0 µm.

9. Verre de lunette selon l'une des revendications 7 à 8, dans lequel la feuille polarisante comprend au moins une couche de feuille polarisante et une structure multicouche, qui comprend en plus de l'au moins une couche de feuille polarisante au moins une couche de soutien.

10. Verre de lunette selon l'une des revendications précédentes, le verre de lunette comprenant au moins une couche fonctionnelle, choisie parmi une couche de vernis dur, une couche de antireflet et/ou une couche antibuée, sur la surface avant et/ou la surface arrière du verre de lunette.

11. Verre de lunette selon la revendication 10, **caractérisé en ce que** le verre de lunette comprend a) au moins une couche de vernis dur, auquel cas on utilise pour fabriquer la couche de vernis dur de préférence une composition comprenant au moins un dérivé de silane (R⁴O) Si (OR¹) (OR²) (OR³), R¹, R², R³, R⁴ étant identiques ou différents les uns des autres, substitués ou non substitués et R¹, R², R³, R⁴ étant choisis dans le groupe consistant en les groupes alkyle, acyle, alkylénacyle, cycloalkyle, aryle et alkylénaryle, ainsi qu'au moins un dérivé de silane R⁶R⁷₃₋ₙSi(OR⁵)ₙ, dans laquelle R⁵ est choisi dans le groupe consistant en les groupes alkyle, acyle, alkylénacyle, cycloalkyle, aryle et alkylénaryle, R⁵ est substitué ou non substitué, R⁶ représente un radical organique, qui comprend un groupe époxyde, R⁷ est choisi dans le groupe consistant en les groupes alkyle, cycloalkyle, aryle et alcénylaryle, R⁷ est substitué ou non substitué, b) au moins une couche antireflet, qui comprend de préférence au moins trois couches discrètes, chacune en ou comportant au moins un oxyde métallique, un hydroxyde métallique et/ou un oxyhydrate métallique d'Al, Si, Ti, Zr, Ce, Sn, In, Cr et/ou les mélanges de ceux-ci, la couche de la couche antireflet située le plus loin de la surface avant ou de la surface arrière du verre de lunette non revêtu comprenant de l'oxyde de silicium, de l'hydroxyde de silicium et/ou de l'oxyhydrate de silicium, c) éventuellement un revêtement antibuée, pouvant être obtenu par liaison covalente d'un dérivé de silane de formule RₒXₘSiBₙ sur la surface de la couche antireflet de l'étape b) ou réticulation croisée de molécules voisines, avec m = 1-3, n = 1-2 et o = 0-1, à la condition que m + n + o = 4, le radical X est choisi parmi un halogène ou un alcoxy en C1-4, les radicaux X étant identiques ou différents pour m = 2-3, les radicaux individuels X étant identiques ou différents, le radical R représente un alkyle en C1-4, le radical B présente la structure -B1-B2 dans laquelle B2 est un groupe hydrophile terminal, qui est réticulé à au moins un groupe hydrophile d'une molécule voisine de la couche antibuée, et -B1- représente soit un groupe espaceur, qui relie le groupe hydrophile B2 à l'atome de silicium, soit une liaison covalente, le groupe hydrophile terminal B2 représentant un poly(méth)acrylate, les radicaux individuels B étant pour n = 2 identiques ou différents, et le poly(méth)acrylate du groupe hydrophile terminal B2 comprenant des motifs monomères qui sont choisis parmi CH₂=C(CH₃)COO-alkyle en C₁₋₄, CH₂=C (H) COO-alkyle en C₁₋₄, le méthacrylate d'hydroxyéthylène, l'acide 2-acrylamido-2-méthylpropanesulfonique, le triacrylate de triméthylolpropane ou le tétraacrylate de pentaérythritol, ou les mélanges de ceux-ci.

12. Procédé de fabrication d'au moins un verre de lunette selon l'une des revendications précédentes, comprenant au moins une couche colorante et/ou à effet et éventuellement au moins une feuille polarisante, le procédé comprenant les étapes suivantes :
a) fourniture d'un modèle tridimensionnel du verre de lunette,
b) découpe numérique du modèle tridimensionnel de l'étape a) en des couches bidimensionnelles individuelles,
c) fourniture d'au moins une encre d'impression 1, de préférence une encre d'impression 3D 1, l'encre d'impression 1 comprenant au moins un composant durcissable par rayonnement,
d) fourniture d'au moins une encre d'impression 2, de préférence une encre d'impression 3D 2, l'encre d'impression 2 comprenant au moins un composant durcissable par rayonnement et au moins un colorant,
e) éventuellement fourniture d'une feuille polarisante,
f) construction du verre de lunette à partir de la somme des couches bidimensionnelles individuelles de l'étape b) par une opération d'impression sur un substrat, les parties du verre de lunette qui ne comprennent pas de couche colorante et/ou à effet étant construites à partir des éléments de volume comprenant l'encre d'impression 1, les parties du verre de lunette qui comprennent au moins une couche colorante et/ou à effet étant construites à partir des éléments de volume comprenant l'encre d'impression 2, l'opération d'impression étant interrompue pour la mise en place de la feuille polarisante éventuelle de l'étape e), puis reprise,
g) durcissement du verre de lunette par une lumière UV, le durcissement pouvant, après application d'éléments de volume individuels ou après mise en place d'une couche d'éléments de volume, avoir lieu en totalité ou en partie, et le durcissement partiel pouvant être parachevé après la fin de l'opération d'impression,
h) éventuellement fraisage et/ou doucissage et/ou tournage et/ou polissage du verre de lunette obtenu dans l'étape g),
i) éventuellement, nouveau revêtement du verre de lunette obtenu dans l'étape g) avec une couche fonctionnelle,
j) éventuellement, détourage du verre de lunette obtenu dans l'étape h) ou dans l'étape i).

13. Procédé de fabrication d'un verre de lunette selon la revendication 12, dans lequel on utilise pour construire le verre de lunette un substrat ou un matériau de soutien sur un substrat, le substrat ou le matériau de soutien correspondant chacun à la forme négative de la surface avant du verre de lunette.

14. Procédé de fabrication d'une lunette, **caractérisé en ce que** le procédé comprend les étapes suivantes :
a) fourniture d'un modèle tridimensionnel pour chacun du verre de lunette considéré, de la partie de la monture de lunette qui entoure au moins partiellement les verres de lunette, ainsi que des branches de la lunette,
b) découpe numérique des différents modèles tridimensionnels de l'étape a) en des couches bidimensionnelles individuelles,
c) fourniture d'au moins une encre d'impression 1, de préférence d'une encre d'impression 3D 1, l'encre d'impression 1 comprenant au moins un composant durcissable par rayonnement,
d) fourniture d'au moins une encre d'impression 2, de préférence d'une encre d'impression 3D 2, l'encre d'impression 2 comprenant au moins un composant durcissable par rayonnement et au moins un colorant,
e) fourniture d'au moins une encre d'impression 3, de préférence d'une encre d'impression 3D 3, l'encre d'impression 3 comprenant au moins un composant durcissable par rayonnement et au moins un colorant, l'au moins un composant durcissable par rayonnement et l'au moins un colorant pouvant être identiques, ou en être différents, au composant durcissable par rayonnement et/ou au colorant de l'encre d'impression 2, et/ou l'au moins un composant durcissable par rayonnement pouvant être identique, ou en être différent, au composant durcissable par rayonnement de l'encre d'impression 1,
f) éventuellement, fourniture d'une feuille polarisante,
g) construction des verres de lunette, de la partie de la monture de lunette qui entoure au moins partiellement les verres de lunette et des branches de lunette, chacun à partir de la somme des couches bidimensionnelles individuelles de l'étape b), par une opération d'impression, les parties du verre de lunette qui ne comprennent pas de couche colorante et/ou à effet étant construites à partir des éléments de volume comprenant l'encre d'impression 2, les parties de la monture de lunette étant construites à partir des éléments de volume comprenant l'encre d'impression 3, et l'opération d'impression étant interrompue pour mise en place de la feuille polarisante éventuelle de l'étape f) à l'intérieur du verre de lunette, et étant ensuite reprise,
h) durcissement des verres de lunette, de la partie de la monture de lunette qui entoure au moins partiellement les verres de lunette et des branches de lunette, chacun à l'aide d'une lumière UV, le durcissement pouvant être réalisé en totalité ou en partie après application de chacun des éléments de volume individuels ou après application de chaque couche d'éléments de volume, et le durcissement partiel pouvant être parachevé après la fin de l'opération d'impression,
i) détachement, du substrat ou de la structure de soutien, des verres de lunette durcis dans l'étape h), de la partie de la monture de lunette qui entoure au moins partiellement les verres de lunette ainsi que des branches de lunette, et assemblage de la partie de la monture de lunette qui entoure au moins partiellement les verres de lunette aux branches de lunette à l'aide d'une charnière, d'un clip, d'un assemblage par enfichage et/ou d'une liaison par aimant.

15. Procédé de fabrication d'une lunette selon la revendication 14, **caractérisé en ce que** la proportion du colorant de l'encre d'impression 3, de préférence de l'encre d'impression 3D 3, est comprise dans la plage de 1,2 % en poids à 32,0 % en poids, par rapport au poids total de l'encre d'impression.
